(19) **Europäisches Patentamt**
European Patent Office
Office européen des brevets

(11) **EP 2 186 869 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.10.2017 Patentblatt 2017/40**

(45) Hinweis auf die Patenterteilung:
**27.06.2012 Patentblatt 2012/26**

(21) Anmeldenummer: **09172222.3**

(22) Anmeldetag: **05.10.2009**

(51) Int Cl.:
***C09J 133/00*** (2006.01)

(54) **Thermisch vernetzende Polyacrylate und Verfahren zu deren Herstellung**

Thermally interlinking polyacrylate and method for its manufacture

Polyacrylate réticulable thermiquement et son procédé de fabrication

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.10.2008 DE 102008052625**

(43) Veröffentlichungstag der Anmeldung:
**19.05.2010 Patentblatt 2010/20**

(73) Patentinhaber: **tesa SE**
**22848 Norderstedt (DE)**

(72) Erfinder:
• **Grittner, Dr. Norbert**
**22459, Hamburg (DE)**

• **Hansen, Sven**
**22765, Hamburg (DE)**
• **Prenzel, Dr. Alexander**
**20259, Hamburg (DE)**
• **Zöllner, Dr. Stephan**
**21244, Buchholz /Nordheide (DE)**

(56) Entgegenhaltungen:

| | |
|---|---|
| EP-A1- 1 978 069 | WO-A-2005/014682 |
| WO-A1-2005/014682 | US-A- 4 612 209 |
| US-A- 5 086 088 | US-A- 5 604 080 |
| US-A- 6 051 652 | US-B1- 6 350 791 |

EP 2 186 869 B2

**Beschreibung**

Die Erfindung betrifft ein Verfahren zur thermischen Vernetzung von Polyacrylaten, eine Polyacrylat-Schmelze enthaltend ein Vernetzer-Beschleuniger-System für derartige Vernetzungen sowie entsprechend hergestellte thermisch vernetzende bzw. vernetzte Polyacrylate.

Für hochwertige industrielle Anwendungen, insbesondere auch als Klebe-, Haftklebe-oder Heißsiegelmassen, werden unter anderem Polyacrylate eingesetzt; da diese sich für die wachsenden Anforderungen in diesen Anwendungsbereichen als gut geeignet herausgestellt haben.

So müssen Haftmassen eine gute Anfassklebrigkeit ("Tack") aufweisen, aber auch hohen Anforderungen im Bereich der Scherfestigkeit gerecht werden. Gleichzeitig muss auch eine gute Verarbeitbarkeit, insbesondere eine hohe Eignung zur Beschichtung dieser Massen auf Trägermaterialien, gegeben sein. Dies wird insbesondere durch Polyacrylate mit hohem Molekulargewicht, hoher Polarität und anschließender effizienter Vernetzung erreicht. Zudem lassen sich Polyacrylate transparent und witterungsstabil herstellen.

Bei der Beschichtung von Polyacrylatmassen aus Lösung oder als Dispersion, die man beispielsweise als Haftkleber, viskoelastischer Träger oder Heißsiegelmassen verwenden kann, ist die thermische Vernetzung seit langem Stand der Technik. In der Regel setzt man den thermischen Vernetzer - z.B. ein multifunktionelles Isocyanat, ein Metall-Chelat oder ein multifunktionelles Epoxid - zur Lösung eines entsprechend mit funktionellen Gruppen ausgestatteten Polyacrylats zu, beschichtet flächig auf ein Substrat mit Hilfe eines Rakels oder Streichbalkens und trocknet anschließend. Dadurch werden Verdünnungsmittel - also organische Lösemittel oder Wasser im Falle der Dispersionen - verdampft und das Polyacrylat entsprechend vernetzt. Die Vernetzung ist sehr wichtig für die Beschichtungen, denn dadurch erhalten sie eine ausreichende Kohäsion und Wärmescherfestigkeit. Ohne Vernetzung wären die Beschichtungen zu weich und würden schon bei geringer Belastung zerfließen. Wesentlich für ein gutes Beschichtungsergebnis ist die Beachtung der Topfzeit (Verarbeitungszeit, in der das System im verarbeitungsfähigen Zustand vorliegt), die je nach Vernetzungssystem deutlich unterschiedlich sein kann. Ist diese Zeit zu kurz, dann hat der Vernetzer schon in der Polyacrylatlösung reagiert, die Lösung ist schon anvernetzt (angegelt bzw. vergelt) und nicht mehr gleichmäßig beschichtbar.

Insbesondere aus Umweltschutzgründen entwickelt sich der technologische Prozess zur Herstellung von Haftklebemassen immer weiter. Durch die restriktiver werdenden Umweltauflagen und die steigenden Preise für Lösungsmittel ist man bestrebt, die Lösungsmittel aus dem Fertigungsprozess für Polymere so weit wie möglich zu eliminieren. In der Industrie sind daher Schmelzverfahren (auch als Heißschmelzverfahren oder Hotmeltverfahren bezeichnet) mit lösungsmittelfreier Beschichtungstechnik zur Herstellung von Polymeren - insbesondere von Haftklebemassen - von anwachsender Bedeutung. Hierbei werden schmelzfähige Polymermassen, also solche Polymermassen, die bei erhöhten Temperaturen in den fließfähigen Zustand übergehen, ohne sich zu zersetzen, verarbeitet. Solche Massen lassen sich hervorragend aus diesem Schmelzzustand heraus verarbeiten. In Weiterentwicklungen dieses Prozesses kann auch die Herstellung lösungsmittelarm oder lösungsmittelfrei durchgeführt werden.

Die Einführung der Hotmelt-Technologie stellt wachsende Anforderungen an die Klebemassen. Insbesondere die vorgenannten schmelzfähigen Polyacrylatmassen (andere Bezeichnungen: "Polyacrylathotmelts", "Acrylathotmelts") werden sehr intensiv auf Verbesserungen hin untersucht. Bei der Beschichtung von Polyacrylatmassen aus der Schmelze ist die thermische Vernetzung bislang nicht sehr verbreitet, obwohl dieses Verfahren Vorteile hätte.

Bislang werden Acrylathotmelts vor allem durch strahlenchemische Verfahren (UV-Bestrahlung, ESH-Bestrahlung) vernetzt. Diese Verfahrensweise ist aber mit diversen Nachteilen verbunden:

- im Falle der Vernetzung mittels UV-Strahlen sind nur UV-transparente (UVdurchlässige) Schichten vernetzbar,
- im Falle der Vernetzung mit Elektronenstrahlen (Elektronenstrahlvernetzung bzw. Elektronenstrahlenhärtung, auch ESH) besitzen die Elektronenstrahlen nur eine begrenzte Eindringtiefe, die abhängig von Dichte des bestrahlten Materials und von der Beschleunigerspannung ist,
- in beiden vorgenannten Verfahren weisen die Schichten nach der Vernetzung ein Vernetzungsprofil auf, und die Haftklebeschicht vernetzt nicht homogen

Die Haftklebeschicht muss relativ dünn sein, damit gut vernetzte Schichten erhalten werden. In Abhängigkeit von Dichte, Bescheunigerspannung (ESH) und aktiver Wellenlänge (UV) variiert die durchstrahlbare Dicke zwar, ist aber immer stark limitiert, so dass sich nicht beliebig dicke Schichten durchvemetzen lassen, und zwar schon gar nicht homogen.

Im Stand der Technik sind auch einige Verfahren zur thermischen Vernetzung von Acrylathotmelts bekannt. Hierbei wird jeweils zur Acrylatschmelze vor der Beschichtung ein Vernetzer zugesetzt, dann wird ausgeformt und zur Rolle gewickelt.

Eine direkte thermische Vernetzung von Acrylat-Hotmeltmassen, die NCO-reaktive Gruppen enthalten, wird in EP 0 752 435 A1 beschrieben. Die verwendeten blockierungsmittelfreien Isocyanate, insbesondere sterisch gehinderte und dimerisierte Isocyanate, benötigen sehr drastische Vernetzungsbedingungen, so dass eine sinnvolle technische Umsetzung Probleme bietet. Die in der EP 0 752 435 A1 beschriebene Vorgehensweise führt bei den Bedingungen, wie sie bei einer Verarbeitung aus der Schmelze herrschen, zu einer raschen, relativ weitgehenden Vernetzung, so dass eine Verarbeitung der Masse, insbesondere in Hinblick auf eine Beschichtung von Trägermaterialien, schwierig ist. Insbesondere können keine sehr homogenen Klebstoffschichten erhalten werden, wie sie für viele technische Anwendungen von Klebebändern erforderlich sind.

Weiterhin ist die Verwendung von blockierten Isocyanaten Stand der Technik. Nachteilig an diesem Konzept ist die Freisetzung von Blockierungsgruppen bzw. Fragmenten, die einen negativen Effekt auf die klebtechnischen Eigenschaften haben. Ein Beispiel ist US 4,524,104 A. Hier werden Acrylatschmelzhaftkleber beschrieben, die mit blockierten Polyisocyanaten zusammen mit Cycloamidinen oder Salzen davon als Katalysator vernetzt werden können. Bei diesem System können zum einen der notwendige Katalysator, vor allem aber das entstehende HCN, Phenol, Caprolactam oder dergleichen die Produkteigenschaften stark beeinträchtigen. Zudem sind auch bei diesem Konzept häufig drastische Bedingungen zur Freisetzung der reaktiven Gruppen benötigen. Ein nennenswerter Produkteinsatz ist bislang nicht bekannt und erscheint zudem unattraktiv. In der US 6,340,719 B1 werden ebenfalls blockierte Mono- oder Polyisocyanate beschrieben, die über eine Doppelbindung in das Polyacrylat eingebaut werden. Auch hier ergeben sich die oben genannten Probleme und es kommt noch hinzu, dass bei der Verarbeitung in der Schmelze, die Deblokkierung auf alle Fälle noch nicht ablaufen darf, da durch die Anknüpfung an das Polymerrückgrat schon eine Reaktion der freigesetzten Isocyanatfunktionalität zu einer Netzwerkbildung und somit zur Vergelung führen kann.

Die DE 10 2004 044 086 A1 beschreibt ein Verfahren zur thermischen Vernetzung von Acrylathotmelts, bei dem ein lösemittelfreies funktionalisiertes Acrylatcopolymer, welches nach Zudosieren eines thermisch reaktiven Vernetzers eine für das Compoundieren, Fördern und Beschichten ausreichend lange Verarbeitungszeit hat, bevorzugt mittels eines Walzenverfahrens auf eine bahnförmige Schicht eines weiteren Materials, insbesondere ein bandförmiges Trägermaterial oder eine Klebmassenschicht, beschichtet wird und welches nach der Beschichtung unter milden Bedingungen nachvernetzt, bis eine für Haftklebebänder ausreichende Kohäsion erreicht wird. Nachteilig an diesem Verfahren ist, dass durch die Reaktivität des Vernetzers (Isocyanats) die freie Verarbeitungszeit und der Vernetzungsgrad vorbestimmt wird. Bei der Verwendung von Isocyanaten reagieren diese zum Teil schon bei Zugabe, wodurch je nach System die gelfreie Zeit sehr kurz sein kann. Eine Masse mit einem höheren Anteil an funktionellen Gruppen wie Hydroxygruppen oder Carbonsäure ist dann in den Beschichtungen nicht mehr ausreichend gut beschichtbar. Ein streifiges, mit Gelstippen durchsetztes, also inhomogenes Strichbild wäre die Folge.

Weiterhin ergibt sich das Problem, dass der erzielbare Vernetzungsgrad begrenzt ist. Wenn durch Zusatz einer höheren Vernetzermenge ein höherer Vernetzungsgrad gewünscht ist, hat dies bei Verwendung multifunktioneller Isocyanate Nachteile. Die Masse würde zu schnell reagieren und wäre - wenn überhaupt - nur mit sehr geringer Verarbeitungszeit und somit sehr hoher Beschichtungsgeschwindigkeit beschichtbar, was die Problematik des nicht homogenen Beschichtungsbildes erhöhen würde.

Die DE 100 08 841 A1 beschreibt Polyacrylate, welche durch thermische Vernetzung einer Polymermischung zugänglich ist, die tert-Butoxycarbonyl- (BOC-) Schutzgruppen, einen kationischen Photoinitiator und ein bifunktionelles Isocyanat und/oder bifunktionelles Epoxid enthält. Beschrieben ist weiterhin ein Verfahren zur Herstellung von vernetzten Polyacrylaten, bei welchem die zu vernetzenden Polymere zunächst durch Einführung von tert-Butoxycarbonylgruppen geschützt werden und die Vernetzung erst nach der Entschützung durch thermische Behandlung der nunmehr entschützten Polyacrylate stattfindet. Die Einführung der Schutzgruppen dient dabei der Vermeidung der erst im Nachhinein angestrebten Vernetzungsreaktion, wenn während früher Verarbeitungsstadien bereits hohe Prozesstemperaturen vorliegen, wie es beispielsweise im Hotmelt-Prozess der Fall ist. Der Schutz gilt insbesondere der Vernetzungsreaktion zu diesem Zeitpunkt, aber auch allen sonstigen Konkurrenzreaktionen, die an den ungeschützten funktionellen Gruppen des zu verarbeitenden Polymers, insbesondere an dessen Hydroxidgruppen, angreifen würden.

Nachteilig an dem dort vorgestellten Verfahren ist, dass die reaktiven Gruppen nach der Beschichtung erst durch UV-Bestrahlung freigesetzt werden müssen. Damit gelten hier für die thermische Vernetzung die Nachteile, die schon oben für die strahleninduzierte Vernetzung (UV-Bestrahlung) angeführt wurden. Zudem wird brennbares Isobuten freigesetzt.

EP 1 317 499 A beschreibt ein Verfahren zur Vernetzung von Polyacrylaten über eine UV-initiierte Epoxidvernetzung, bei denen die Polyacrylate während der Polymerisation mit entsprechenden Gruppen funktionalisiert wurden. Das Verfahren bietet Vorteile bezüglich der Scherfestigkeit der vernetzten Polyacrylate gegenüber konventionellen Vernetzungsmechanismen, insbesondere gegenüber der Elektronenstrahl-Vernetzung. In dieser Schrift wird die Verwendung von di- oder multifunktionellen sauerstoffhaltigen Verbindungen, insbesondere von di- oder multifunktionellen Epoxiden oder Alkoholen, als Vernetzungsreagenz für funktionalisierte Polyacrylate, insbesondere funktionalisierte Acrylatschmelzhaftkleber, beschrieben.

Da die Vernetzung durch UV-Strahlen initiiert wird, ergeben sich auch hier die bereits genannten Nachteile.

Die EP 1 978 069 A offenbart ein Vernetzersystem für die thermische Vernetzung von Polyacrylaten, in der ein Vernetzer-Beschleuniger-System umfassend zumindest eine epoxidgruppenhaltige Substanz als Vernetzer und zumindest eine bei einer Temperatur unterhalb der Schmelztemperatur des Polyacrylates für eine Verknüpfungsreaktion zwischen den Polyacrylaten und den Epoxidgruppen beschleunigend wirkende Substanz. Als derartige Beschleuniger werden beispielsweise Amine oder Phosphine vorgeschlagen. Dieses System führt bereits zu einer guten Einsatzmöglichkeit für das Heißschmelzverfahren, wünschenswert wäre aber eine Erhöhung der Vernetzungsgeschwindigkeit des Polyacrylates nach der Ausformung.

Darüber hinaus werden in WO 2005/014682 A1 vernetzbare Polyurethane beschrieben, die mittels eines Epoxid-Vernetzungsmittels und einer weiteren, als Epoxid-Härtemittel beschriebenen Komponente hergestellt werden. Das Härtemittel kann dabei unter anderem eine Triazin-, Guanidin- oder Polyaminverbindung sein.

Aufgabe der Erfindung ist es, eine thermische Vernetzung von aus der Schmelze verarbeitbaren Polyacrylatmassen ("Polyacrylat-Hotmelts"), zu ermöglichen, wobei für die Verarbeitung aus der Schmelze eine hinreichend lange Verarbeitungszeit ("Topfzeit") zur Verfügung stehen soll, insbesondere verglichen mit der Topfzeit bei den bekannten thermischen Vernetzungssystemen für Polyacrylat-Hotmelts und in sofern eine Alternative zu den Systemen, wie sie beispielsweise in den Schriften DE 10 2004 044 086 A oder EP 1 978 069 A beschrieben sind, anzubieten. Vorzugsweise soll nach einer Ausformung der Polyacrylatmasse eine Vernetzungsreaktion bei verringerten Temperaturen (beispielsweise Raumtemperatur) stattfinden, die schneller abläuft als bei den bisher bekannten Systemen, und/oder weiter vorzugsweise sollen Vernetzer-Beschleuniger-Systeme eingesetzt werden, bei denen die Abbau- oder Verbrennungsprodukte eine erhöhte Umweltfreundlichkeit - insbesondere aufgrund eines verminderten Chlorgehaltes der Vernetzer - aufweisen.

Dabei soll auf den Einsatz von Schutzgruppen, die gegebenenfalls durch aktinische Strahlung oder andere Methoden wieder entfernt werden müssten, und flüchtigen Verbindungen, die nachher im Produkt verbleiben und ausdampfen, verzichtet werden können. Weiterhin soll der Vernetzungsgrad der Polyacrylatmasse auf ein gewünschtes Level einzustellen sein, ohne dass die Vorteile der Prozessführung negativ beeinflusst würden.

Im folgenden werden die Polyacrylatmassen auch in synonymer Weise kurz als "Polyacrylate" bezeichnet. Für die nicht vernetzten Polyacrylatmassen wird auch der Begriff "Polymerisate" verwendet, für die vernetzten oder anvernetzten Polyacrylatmassen der Begriff "Polymere".

Überraschender Weise wurde gefunden, dass ein Vernetzer-Beschleuniger-System ("Vernetzungssystem") enthaltend zumindest einen cyklischen Ether insbesondere eine Epoxid- oder Oxetangruppen enthaltende Substanz als Vernetzer und zumindest eine bei einer Temperatur unterhalb der Schmelztemperatur eines zu vernetzenden Polyacrylats für Vernetzungsreaktionen mittels Epoxid- oder Oxetangruppen enthaltende Verbindungen beschleunigend wirkende Substanz als Beschleuniger zu einer hervorragenden Lösung der genannten Aufgabe führte; es werden als Beschleuniger ein oder mehrere Substanzen ausgewählt aus Dicyandiamiden, Melaminen, 1,3,5-Triazinen, Ammelinen, Ammeliden, Cyanursäuren, Isocyanursäuren und Guanaminen eingesetzt.

Beschleunigend wirkende Substanz bedeutet insbesondere, dass die Substanz die Vernetzungsreaktion in sofern unterstützt, dass sie für eine erfindungsgemäß hinreichende Reaktionsgeschwindigkeit sorgt, während die Vernetzungsreaktion in Abwesenheit des Beschleunigers bei ausgewählten Reaktionsparametern, hier insbesondere einer Temperatur, die unterhalb der Schmelztemperatur der Polyacrylate liegt, nicht oder nur unzureichend langsam ablaufen würde. Der Beschleuniger sorgt also für eine wesentliche Verbesserung der Reaktionskinetik der Vernetzungsreaktion. Dies kann erfindungsgemäß auf katalytische Weise, aber auch durch Einbindung in das Reaktionsgeschehen erfolgen.

Die zu vernetzenden Polyacrylate enthalten funktionelle Gruppen, die geeignet sind, mit Epoxid- oder Oxetangruppen Verknüpfungsreaktionen - insbesondere im Sinne von Additions- oder Substitutionsreaktionen - einzugehen. Epoxide ohne entsprechende Beschleuniger reagieren nur unter Wärmeeinfluss, und zwar insbesondere erst nach längerer Zufuhr thermischer Energie. Oxetane wiederum würden ohne Katalysatoren bzw. Beschleuniger noch schlechter reagieren. Die bekannten Beschleunigersubstanzen wie zum Beispiel $ZnCl_2$ führen zwar zur Verbesserung der Reaktionsfähigkeit im Temperaturbereich der Schmelze, aber bei fehlender Zufuhr thermischer Energie von außen (also beispielsweise bei Raumtemperatur) geht die Reaktivität der Epoxide oder Oxetane auch in Gegenwart der Beschleuniger verloren, so dass die Vernetzungsreaktion abbricht (sie wirken also bei der gegebenen Temperatur nicht mehr beschleunigend im oben dargestellten Sinne). Dies ist insbesondere dann ein Problem, wenn die als Hotmelt verarbeiteten Polyacrylate innerhalb relativ kurzer Zeiträume (einige Minuten) beschichtet werden und dann mangels weiterer Wärmezufuhr rasch bis zur Raumtemperatur bzw. Lagerungstemperatur abkühlen. Ohne die Initiierung einer weiteren Vernetzungsreaktion könnten keine hohen Vernetzungsgrade erzielt werden, was insbesondere für viele Anwendungsbereiche von Polyacrylaten, wie insbesondere der Verwendung als Haftklebemasse, in einer zu geringen Kohäsion der Masse resultieren würde.

Würde das Vernetzersystem mit nur in der Wärme funktionalen Beschleunigern, beispielsweise Epoxid- oder Oxetanvernetzer in Gegenwart von $ZnCl_2$, zu früh in das Polyacrylat-System gegeben werden (um einen hinreichenden Vernetzungsgrad zu erzielen), so könnte man die Massen nicht mehr homogen verarbeiten, insbesondere compoundieren und beschichten, da die Massen zu schnell zu hoch vernetzen oder gar vergelen ("unkontrolliert" vernetzen) würden.

Durch die erfindungsgemäße Kombination der genannten Komponenten konnte ein thermisches Vernetzungsverfahren angeboten werden, dass bei der Verarbeitung der Polyacrylat-Heißschmelzmassen, also in der Schmelze, nicht zu unkontrollierten Reaktionen (Vergelung der Masse) führt und für die Verarbeitung eine hinreichend lange Zeit (Topfzeit) belässt, so dass insbesondere bei der Ausstreichung als Schicht oder der Auftragung auf einen Träger ein gleichmäßiges und blasenfreies Strichbild geschaffen werden kann. Das Vernetzer-Beschleuniger-System ist zudem in der Lage, das Polyacrylat nach der Verarbeitung, insbesondere nach Ausstreichung als Schicht oder der Auftragung auf einen Träger, bei deutlich verringerter Zufuhr von thermischer Energie als zur Erzielung der Schmelze, also nach Abkühlung, weiter zu vernetzen, ohne dass hierzu aktinische Bestrahlung notwendig wäre, und dies mit einer gegenüber dem Stand der Technik bekannten Systemen signifikant erhöhten Vernetzungsgeschwindigkeit.

Insbesondere sind die Polyacrylate durch das Vernetzer-Beschleuniger-System in der Lage, ohne weitere aktiv, also verfahrenstechnisch, zugeführte thermische Energie (Beheizung), insbesondere nach Abkühlung auf Raumtemperatur (RT, 20 °C) oder auf eine Temperatur nahe der Raumtemperatur, weiter zu vernetzen. Insbesondere kann in dieser Phase der Vernetzung auf Beheizung verzichtet werden, ohne dass dies zu einem Abbruch der Vernetzungsreaktion führen würde.

Der Hauptanspruch betrifft daher eine Polyacrylat-Schmelze enthaltend ein Vernetzer-Beschleuniger-System für die thermische Vernetzung von Polyacrylaten mit funktionellen Gruppen, die geeignet sind, mit cyklischen Ethern, insbesondere Epoxid- oder Oxetangruppen, Verknüpfungsreaktionen einzugehen, umfassend zumindest eine epoxid- oder oxetangruppenhaltige Substanz (Vernetzer) zu 0,1 - 5 Gew.-%, bezogen auf das Polymer ohne Additive, und zumindest eine Substanz ausgewählt aus Dicyandiamiden, Melaminen, 1,3,5-Triazinen, Ammelinen, Ammeliden, Cyanursäuren, Isocyanursäuren und Guanaminen (Beschleuniger), wobei das Polyacrylat ein mit Epoxid- oder Oxetangruppen vernetzbares Polyacrylat ist. Die hier genannten Beschleuniger sind bekannt als Härter für Epoxidharze, jedoch wurde überraschend gefunden, dass sie sich auch als Beschleuniger zur Vernetzung von Polyacrylaten eignen, die nach der thermischen Aktivierung in einem Hotmeltprozess auch bei Raumtemperatur nachvernetzen - wobei normale Reaktionstemperaturen zur Härtung von Epoxidharzen bei ca. 180 °C liegen (Ullmann's Encyclopedia of Industrial Chemistry, T. Günther, B. Mertschenk, U. Rust, Cyanamides, Vol. 10, 173-197, 6th Ed., Wiley-VCh, Weinheim, 2003) und somit weit über den Prozesstemperaturen des Hotmeltverfahrens liegen - und nach einer gewissen Zeit einen stabilen Vernetzungsgrad erreichen. Der Einsatz solcher Systeme als Beschleuniger war dem Fachmann somit nicht offensichtlich. Weiterhin weisen diese Beschleunigersysteme den Vorteil auf, dass sie als nichtflüchtige Komponente in der Klebemasse verbleiben, indem sie durch Neutralisation der Acrylsäure im Polyacrylat ionisch in das Polymer eingebaut werden. Insbesondere überraschend wurde für die erfindungsgemäß genannten Beschleuniger gefunden, dass sie den beispielsweise in der EP 1 978 069 A offenbarten besonders in Bezug auf die Geschwindigkeit der Vernetzunasreaktion deutlich überlegen sind.

Das Vernetzer-Beschleuniger-System wird insbesondere in Gegenwart von funktionellen Gruppen eingesetzt, die mit Epoxid- oder Oxetangruppen eine Verknüpfungsreaktion, insbesondere in Form einer Addition oder Substitution, eingehen können. Bevorzugt kommt es also zu einer Verknüpfung der die funktionellen Gruppen tragenden Bausteine mit den die Epoxid- oder Oxetangruppen tragenden Bausteinen (insbesondere im Sinne einer Vernetzung der entsprechenden die funktionellen Gruppen tragenden Polymerbausteine über die Epoxid- oder Oxetangruppen tragenden Substanzen als Verknüpfungsbrücken).

Ein weiterer Aspekt der Erfindung betrifft ein Vernetzungsverfahren für Polyacrylate mit funktionellen Gruppen, die geeignet sind, mit cyklischen Ethern, insbesondere Epoxid- oder Oxetangruppen, Verknüpfungsreaktionen einzugehen, welches mittels des erfindungsgemäßen Vernetzer-Beschleuniger-Systems durchgeführt werden kann; insbesondere ein Verfahren zur thermischen Vernetzung von aus der Schmelze verarbeitbaren Polyacrylathaftklebemassen beziehungsweise von Polyacrylaten mit funktionellen Gruppen, die geeignet sind, mit cyklischen Ethern Verknüpfungsreaktionen einzugehen, bei dem das vorstehend beschrieben Vernetzer-Beschleuniger-System eingesetzt wird.

Sofern im Folgenden im Zusammenhang mit dem erfindungsgemäßen Verfahren Angaben zu vorteilhaften Ausführungen zu dem eingesetzten Vernetzer-Beschleuniger-System gemacht werden, also beispielsweise vorteilhafte Zusammensetzungen und dergleichen, sollen diese auch für das erfindungsgemäße Vernetzer-Beschleuniger-System als solches - auch ohne direkten Bezug zu den Verfahrensdarstellungen und -ansprüchen - gelten.

Bei den epoxid- oder oxetangruppenhaltigen Substanzen handelt es sich insbesondere um multifunktionelle Epoxide oder Oxetane, also solche mit zumindest zwei Epoxid- oder Oxetangruppen, entsprechend kommt es insgesamt zu einer mittelbaren Verknüpfung der die funktionellen Gruppen tragenden Bausteine.

Neben oder statt bi- und/oder multifunktionellen Epoxiden oder Oxetane lassen sich auch gemischtfunktionelle Verbindungen einsetzen, also solche enthaltend zumindest eine Epoxid- und zumindest eine Oxetangruppe, insbesondere solche enthaltend genau eine Epoxid- und eine Oxetangruppe.

Das erfindungsgemäße Verfahren bietet in hervorragender, nicht zu erwartender Weise den Vorteil, dass ein stabiler Vernetzungsprozess für Polyacrylate angeboten werden kann, und zwar mit hervorragender Steuerungsmöglichkeit bezüglich des Vernetzungsbildes durch weitgehende Entkoppelung von Vernetzungsgrad und Reaktivität (Reaktionskinetik).

Das erfindungsgemäße Verfahren dient in vorteilhafter Weise zur thermischen Vernetzung von Polyacrylaten. Es wird einer Polyacrylatmasse (im folgenden einfach als "Polyacrylat" bezeichnet), insbesondere einem Polyacrylatcopolymer, auf Basis von Acrylsäureestern und/oder Methacrylsäureestern ausgegangen, wobei zumindest ein Teil der Acrylsäureester und/oder Methacrylsäureester funktionelle Gruppen enthält, die mit cyklischen Ethern insbesondere Epoxid- oder Oxetangruppen in vorstehend geschilderter Weise, insbesondere unter Bildung einer kovalenten Bindung, reagieren können.

Die vernetzten Polyacrylate können für alle möglichen Anwendungsgebiete eingesetzt werden, bei denen eine gewisse Kohäsion in der Masse gewünscht ist. Insbesondere günstig ist das Verfahren für viskoelastische Materialien auf Polyacrylatbasis. Ein spezielles Anwendungsgebiet des erfindungsgemäßen Verfahrens ist die thermische Vernetzung von Haftklebemassen, insbesondere auch Heißschmelz-Haftklebemassen.

Bei dem erfindungsgemäßen Verfahren geht man insbesondere vorteilhaft derart vor, dass man die Vernetzung in der Schmelze des Polyacrylates initiiert und dieses danach zu einem Zeitpunkt abkühlt, zu dem das Polyacrylat noch hervorragend verarbeitbar ist, also beispielsweise homogen beschichtbar und/oder hervorragend ausformbar. Insbesondere für Klebebänder ist ein homogenes, gleichmäßiges Strichbild erforderlich, wobei sich in der Klebemassenschicht keine Klumpen, Stippen oder ähnliches finden lassen sollen. Entsprechend homogene Polyacrylate werden auch für die anderen Anwendungsformen verlangt.

Die Ausformbarkeit bzw. Beschichtbarkeit ist gegeben, wenn das Polyacrylat noch nicht oder erst zu einem geringen Grad vernetzt ist; vorteilhaft beträgt der Vernetzungsgrad bei Beginn der Abkühlung nicht mehr als 10 %, bevorzugt nicht mehr als 3 %, noch besser nicht mehr als 1 %. Die Vernetzungsreaktion schreitet auch nach der Abkühlung fort, bis der endliche Vernetzungsgrad erreicht ist.

Der Begriff "abkühlen" umfasst hier und im Folgenden auch das passive Abkühlenlassen durch Entfernung der Beheizung.

Das erfindungsgemäße Verfahren kann insbesondere derart durchgeführt werden, dass man die Vernetzung in der Schmelze des Polyacrylats in Gegenwart des Vernetzers, insbesondere des Vernetzer-Beschleuniger-Systems, initiiert (also thermisch), bevorzugt zu einem Zeitpunkt kurz vor der Weiterverarbeitung, insbesondere der Ausformung oder Beschichtung. Dies findet für gewöhnlich in einem Verarbeitungsreaktor (Compounder, beispielsweise ein Extruder) statt. Dann wird die Masse aus dem Compounder entnommen und wie gewünscht weiterverarbeitet und/oder ausgeformt. Bei der Verarbeitung bzw. Ausformung oder danach wird das Polyacrylat abgekühlt, indem aktiv abgekühlt wird und/oder die Erwärmung eingestellt wird oder indem das Polyacrylat auf eine Temperatur unterhalb der Verarbeitungstemperatur beheizt wird (ggf. auch hier nach vorheriger aktiver Kühlung), wenn die Temperatur nicht bis auf Raumtemperatur abfallen soll.

Die Weiterverarbeitung bzw. Ausformung kann insbesondere vorteilhaft die Beschichtung auf einen permanenten oder temporären Träger sein.

Bei einer sehr vorteilhaften Variante der Erfindung wird das Polyacrylat bei der oder nach der Entnahme aus dem Verarbeitungsreaktor auf einen permanenten oder temporären Träger beschichtet und bei der Beschichtung oder nach der Beschichtung die Polyacrylatmasse auf Raumtemperatur (oder eine Temperatur in der Nähe der Raumtemperatur) abkühlt, insbesondere unmittelbar nach der Beschichtung.

Initiierung "kurz vor" der Weiterverarbeitung bedeutet insbesondere, dass mindestens eine der zur Vernetzung erforderlichen Komponenten (insbesondere die epoxid- oder oxetangruppenhaltigen Substanzen und/oder der Beschleuniger) so spät wie möglich im Hotmelt (also in der Schmelze) zugesetzt werden (homogene Verarbeitbarkeit aufgrund hier noch geringen Vernetzungsgrades; s.o.), aber so früh wie nötig, dass eine gute Homogenisierung mit der Polymermasse erfolgt.

Das Vernetzer-Beschleuniger-System ist so gewählt, dass die Vernetzungsreaktion bei einer Temperatur unterhalb der Schmelztemperatur der Polyacrylatmasse, insbesondere bei Raumtemperatur, voranschreitet. Die Vernetzungsmöglichkeit bei Raumtemperatur bietet dabei den Vorteil, dass keine zusätzliche Energie zugeführt werden muss und daher eine Kostenersparnis verbucht werden kann.

Die Bezeichnung "Vernetzung bei Raumtemperatur" bezieht sich dabei insbesondere auf die Vernetzung bei üblichen Lagertemperaturen von Klebebändern, viskoelastischen nichtklebrigen Materialien oder dergleichen und soll in sofern nicht auf 20 °C beschränkt sein. Selbstverständlich ist es erfindungsgemäß auch vorteilhaft, wenn die Lagertemperatur aufgrund witterungsbedingter oder sonstiger Temperaturschwankungen von 20 °C abweicht - oder die Raumtemperatur aufgrund lokaler Gegebenheiten von 20°C differiert - und die Vernetzung - insbesondere ohne weitere Energiezufuhr - fortschreitet.

Als epoxid- oder oxetangruppenhaltige Substanzen werden insbesondere multifunktionelle Epoxide oder Oxetane eingesetzt, also solche, die mindestens zwei Epoxid- oder Oxetaneinheiten pro Molekül aufweisen (also mindestens bifunktional sind). Dies können sowohl aromatische als auch aliphatische Verbindungen sein.

Hervorragend geeignete multifunktionelle Epoxide sind Oligomere des Epichlorhydrins, Epoxyether mehrwertiger Alkohole [insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche], Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, epoxidierte Cycloalkene [insebesondere Adipinsäuredi-3,4-epoxycyclohexylmethylester, 3,4-Epoxycyclohexylmethyl-3,4-epoxycyclohexancarboxylat, 1,2,5,6-Diepoxycyclooctan] Phenol-Formaldehyd-Kondensationsprodukte, wie Phenolalkohole, Phenolaldehydharze und ähnliche, S- und N-haltige Epoxide (zum Beispiel N,N-Diglycidylanillin, N, N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestem ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-Glycidether, Cyclohexan-dimethanoldiglycidether, Glycerintriglycidether, Neopentylglykoldiglycidether, Pentaerythrittetraglycidether, 1,6-Hexandioldiglycidether), Polypropylenglykoldiglycidether, Trimethylolpropantriglycidether, Bisphenol-A-Diglycidether und Bisphenol-F-Diglycidether.

Hervorragend geeignete multifunktionale Oxetane oder Vernetzer, die in sich eine Epoxid- und eine Oxetanfunktionalität kombinieren, sind Bis[1-ethyl(3-oxetanyl)]methylether, 2,4:3,5-Dianhydrido-1,6-di-O-benzoyl-mannitol und 1,4-Bis[2,2-dimethyl-(1,3)dioxolan-4-yl]-3,3-dimethyl-2,5-dioxa-bicyclo[2.1.0]pentan.

Als Beschleuniger werden insbesondere bevorzugt solche Verbindungen eingesetzt, die mit den Bausteinen der Polyacrylate Reaktionen eingehen, die aber wesentlich langsamer ablaufen als die Aktivierung der cyklischen Ether wie z. B. Epoxide und Oxetane.

Die erfindungsgemäß zu vernetzende Zusammensetzung enthält zumindest ein Polyacrylat mit funktionellen Gruppen, die geeignet sind, mit cyklischen Ethern, insbesondere Epoxid- oder Oxetangruppen, Verknüpfungsreaktionen einzugehen. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Es handelt sich um ein mit Epoxid- oder Oxetangruppen vernetzbares Polyacrylat. Entsprechend werden als Monomere oder Comonomere bevorzugt funktionelle, mit Epoxid- oder Oxetangruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist. Weitere Monomere, die als Comonomere für das Polyacrylat verwendet werden können, sind z.B. Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomeren.

Für das erfindungsgemäße Verfahren wird vorzugsweise ein Polyacrylat eingesetzt, welches auf die folgende Eduktmischung basiert, enthaltend insbesondere weich machende Monomere, weiterhin Monomere mit funktionellen Gruppen, die in der Lage sind, mit den Epoxy- oder Oxetangruppen Reaktionen einzugehen, insbesondere Additions- und/oder Substitutionsreaktionen, sowie optional weitere einpolymerisierbare Comonomere, insbesondere hartmachende Monomere. Die Natur des herzustellenden Polyacrylats (Haftklebemasse; Heißsiegelmasse, viskoelastisches nichtklebriges Material und dergleichen) lässt sich insbesondere über eine Variation der Glasübergangstemperatur des Polymers durch unterschiedliche Gewichtsanteile der einzelnen Monomere beeinflussen.

Für rein kristalline Systeme gibt es am Schmelzpunkt $T_s$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_S$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführung bei der Angabe des Glaspunktes der Schmelzpunkt mit umfasst, es wird also als Glasübergangspunkt (oder gleichbedeutend auch als Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus dem jeweiligen Monomeren n in K.

Bevorzugt wird ein Polyacrylat eingesetzt, das auf die folgende Monomerzusammensetzung zurückgeführt werden kann:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,

b) olefinisch ungesättigte Monomere mit funktionellen Gruppen der für eine Reaktivität mit Epoxid- oder Oxetangruppen bereits definierten Art,

c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 °C (DMA bei geringen Frequenzen) aufweist.

Es ist zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Für die Anwendung eines Heißschmelzklebers, also eines Materials, welches erst durch Erwärmen haftklebrig wird, werden die Anteile der entsprechenden Komponenten (a), (b), und (c) insbesondere derart gewählt, dass das Copolymer eine Glasübergangstemperatur ($T_G$) zwischen 15 °C und 100°C aufweist, bevorzugt zwischen 30 °C und 80°C, besonders bevorzugt zwischen 40 °C und 60 °C. Die Anteile der Komponenten (a), (b), und (c) sind entsprechend zu wählen.

Ein viskoelastisches Material, was beispielsweise typischerweise beidseitig mit haftklebrigen Schichten kaschiert sein kann, hat insbesondere eine Glasübergangstemperatur ($T_G$) zwischen - 50 °C bis +100 °C, bevorzugt zwischen -20 °C bis + 60°C, besonders bevorzugt 0 °C bis 40 °C. Die Anteile der Komponenten (a), (b), und (c) sind auch hier entsprechend zu wählen.

Die Monomere der Komponente (a) sind insbesondere weichmachende und/oder unpolare Monomere. Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Reaktion mit den Epoxidgruppen eingehen können.

Bevorzugt werden für die Komponente (b) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (c) sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobomylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethylacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat,

Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid,

Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht $M_w$ von 4000 bis 13000 g/mol), Poly(Methylmethacrylat)ethylmethacrylat ($M_w$ von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat- und acrylatfunktionalisierte Benzophenonderivat-Monomere, die eine Vernetzung durch Elektronenbestrahlung unterstützen sind, z.B. Tetrahydrofufurylacrylat, *N-tert*-Butylacrylamid, Allylacrylat wobei diese Aufzählung nicht abschließend ist.

## Herstellung der Polymerisate

Die Herstellung der Polyacrylate kann nach den dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert.
Vorzugsweise werden die Polyacrylate durch Polymerisation der Monomeren in Lösungsmitteln, insbesondere in Lösungsmitteln eines Siedebereichs von 50 bis 150 °C, vorzugsweise von 60 bis 120°C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegt, hergestellt.
Prinzipiell eignen sich alle für Acrylate dem Fachmann geläufigen, üblichen Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-tert-butylperoxid, Cyclohexyl-sulfonylacetylperoxid, Diisopropylpercarbonat, fert-Butylperoktoat, Benzpinacol. In einer sehr bevorzugten Vorgehensweise wird als radikalischer Initiator 2,2'-Azobis(2-methylbutyronitril) (Vazo® 67™ der Fa. DUPONT) oder 2,2'-Azobis(2-methylpropionitril) (2,2'-Azobisisobutyronitril; AIBN; Vazo® 64™ der Fa. DUPONT) verwendet.
Als Lösungsmittel kommen Alkohole, wie Methanol, Ethanol, n-und iso-Propanol, n-und iso-Butanol, vorzugsweise Isopropanol und/oder Isobutanol; sowie Kohlenwasserstoffe wie Toluol und insbesondere Benzine eines Siedebereichs von 60 bis 120 °C in Frage. Insbesondere können Ketone, wie vorzugsweise Aceton, Methylethylketon, Methylisobutylketon und Ester, wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsgemisch, enthalten, vorgezogen werden.

Die gewichtsmittleren Molekulargewichte $M_w$ der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes $M_w$ und der Polydispersität PD in dieser Schrift beziehen sich auf die Bestimmung per Gelpermeationschromatographie (siehe Messmethode A3; experimenteller Teil)]. Dazu kann es vorteilhaft sein, die Polymerisation in Gegenwart geeigneter Polymerisationsregler wie Thiolen, Halogenverbindungen und/oder Alkoholen durchzuführen, um das gewünschte mittlere Molekulargewicht einzustellen.

Das Polyacrylat hat vorzugsweise einen K-Wert von 30 bis 90, besonders bevorzugt von 40 bis 70, gemessen in Toluol (1%ige Lösung, 21°C). Der K-Wert nach FIKENTSCHER ist ein Maß für das Molekulargewicht und Viskosität des Polymerisats.

Für das erfindungsgemäße Verfahren besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglich das niedrigere Molekulargewicht eine leichtere Verarbeitung aus der Schmelze, da die Fließviskosität gegenüber einem breiter verteilten Polyacrylats bei weitgehend gleichen Anwendungseigenschaften geringer ist. Eng verteilte Polyacrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (vgl. beispielsweise EP 0 824 111 A1; E P 826 698 A1; EP 824110 A1; EP841346A1; EP850957A1) eingesetzt werden. Die unterschiedlichen Möglichkeiten der ATRP sind ferner in den Schriften US 5,945,491 A, US 5,854,364 A und US 5,789,487 A beschrieben.

Man kann den durch das erfindungsgemäße Verfahren erhältlichen Polyacrylaten vor der thermischen Vernetzung zumindest ein klebrigmachendes Harz beimischen. Als zuzusetzende klebrigmachende Harze sind die vorbekannten und in der Literatur beschriebenen Klebharze einsetzbar. Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich Pinen-, Inden- und Kolophoniumharze einsetzen, deren disproportionierte, hydrierte, polymerisierte, veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt lassen sich alle mit dem entsprechenden Polyacrylat kompatiblen (löslichen) Harze einsetzen. In einer besonders bevorzugten Vorgehensweise werden Terpenphenolharze und/oder Kolophoniumester hinzugesetzt.

Optional können auch pulver- und granulatförmige Füllstoffe, Farbstoffe und Pigmente, besonders auch abrasive und verstärkende, wie z.B. Kreiden ($CaCO_3$), Titandioxide, Zinkoxide und Ruße auch zu hohen Anteilen, das heißt von 1 bis 50 Gew.-%, bezogen auf die Gesamtrezeptur, hervorragend in die Polyacrylatschmelze dosiert, homogen eingearbeitet und am 2-Walzenauftragswerk beschichtet werden. Hier versagen oftmals die konventionellen Verfahren aufgrund der dann sehr hohen Viskosität des Gesamtcompounds.

Sehr bevorzugt können verschiedene Kreideformen als Füllstoff eingesetzt werden, wobei besonders bevorzugt Mikrosöhl-Kreide eingesetzt wird. Bei bevorzugten Anteilen bis zu 30 Gew.-% verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe, wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Additive zur Volumenerhöhung, insbesondere zur Herstellung geschäumter Schichten, (wie beispielsweise Blähmittel, Glasvollkugeln, Glashohlkugeln, Mikrokugeln aus anderen Materialien, expandierbare Microballons, Kieselsäure, Silikate, organisch nachwachsende Rohstoffe, beispielsweise Holzmehl, organische und/oder anorganische Nanopartikel, Fasern), weiterhin anorganische und/oder organische Farbstoffe (in Form von Pasten, Compounds oder Pigmenten), Alterungsschutzmitteln, Lichtschutzmitteln, Ozonschutzmitteln, Compoundierungsmittel und/oder Blähmittel vor oder nach der Aufkonzentration des Polyacrylats zugegeben oder eincompoundiert werden. Als Alterungsschutzmittel können bevorzugt sowohl primäre, z.B. 4-Methoxyphenol, als auch sekundäre Alterungsschutzmittel, z.B. Irgafos® TNPP der Fa. CIBA GEIGY, auch in Kombination miteinander eingesetzt werden. Hier soll nur an dieser Stelle auf weitere entsprechenden Irganox® Typen der Fa. CIBA GEIGY bzw. Hostano® der Firma CLARIANT verwiesen werden. Als weitere hervorragende Mittel gegen Alterung können Phenothiazin (C-Radikalfänger) sowie Hydrochinonmethylether in Gegenwart von Sauerstoff sowie Sauerstoff selbst eingesetzt werden.

Optional können die üblichen Weichmacher (Plastifizierungsmittel), insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate und/oder Citrate zudosiert werden.

Weiterhin optional kann das thermisch vernetzbare Acrylathotmelt auch mit anderen Polymeren geblendet bzw. abgemischt werden. Hierzu eignen sich Polymere auf Basis von Naturkautschuk, Synthesekautschuk, EVA, Siliconkautschuk, Acrylkautschuk, Polyvinylether. Hierbei erweist sich als zweckmäßig, diese Polymere in granulierter oder andersartig zerkleinerter Form dem Acrylathotmelt vor Zugabe des thermischen Vernetzers zuzusetzen. Die Herstellung der Polymerblends erfolgt in einem Extruder, bevorzugt in einem Mehrwellenextruder oder in einem Planetwalzenmischer. Zur Stabilisierung der thermisch vernetzten Acrylathotmelts, insbesondere auch von Polymerblends aus thermisch vernetzten Acrylathotmelts und anderen Polymeren, kann es sinnvoll sein, das ausgeformte Material mit Elektronenbestrahlung geringer Dosen zu bestrahlen. Optional können zu diesem Zweck dem Polyacrylat Vernetzungspromotoren wie di-, tri-, oder multifunktionelles Acrylat, Polyester und/oder Urethanacrylat zugesetzt werden.

### Weitere Verfahrensdurchführung

Die Aufkonzentration des Polymerisats kann in Abwesenheit der Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate werden dann in einen Compounder überführt. In besonderen Ausführungen des erfindungsgemäßen Verfahrens kann die Aufkonzentration und die Compoundierung im selben Reaktor stattfinden. Insbesondere kann als Compounder ein Extruder eingesetzt werden. Die Polymerisate liegen im Compounder in der Schmelze vor, entweder indem sie bereits im Schmelzzustand eingegeben werden oder indem sie im Compounder bis zur Schmelze erhitzt werden. Im Compounder werden die Polymerisate durch Beheizung in der Schmelze gehalten. Solange weder Vernetzer (Epoxide oder Oxetane) noch Beschleuniger im Polymerisat vorliegen, wird die mögliche Temperatur in der Schmelze durch die Zersetzungstemperatur des Polymerisates begrenzt. Die Prozesstemperatur im Compounder liegt üblicherweise zwischen 80 bis 150 °C, insbesondere zwischen 100 und 120°C.

Die epoxid- oder oxetangruppenhaltigen Substanzen werden dem Polymerisat bevorzugt vor oder mit der Beschleunigerzugabe zugesetzt.

Die epoxid- oder oxetangruppenhaltigen Substanzen können den Monomeren bereits vor oder während der Polymerisationsphase zugegeben werden, wenn sie für diese hinreichend stabil sind. Vorteilhaft werden die epoxid- oder oxetangruppenhaltigen Substanzen dem Polymerisat aber entweder vor der Zugabe in den Compounder oder bei der Zugabe in den Compounder zugesetzt, also zusammen mit den Polymerisaten in den Compounder gegeben.

In sehr vorteilhafter Vorgehensweise werden die Beschleunigersubstanzen den Polymerisaten kurz vor der Weiterverarbeitung der Polymere, insbesondere einer Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden. Mit dem erfindungsgemäßen Verfahren konnten Topfzeiten von einigen Minuten bis zu einigen zehn Minuten erzielt werden (je nach Wahl der Versuchsparameter), so dass der Beschleuniger innerhalb dieser Zeitspanne vor der Beschichtung zugesetzt werden sollte. Vorteilhaft wird der Beschleuniger so spät wie möglich im Hotmelt zugesetzt, aber so früh wie nötig, dass noch eine gute Homogenisierung mit der Polymermasse erfolgt.

Als sehr vorteilhaft haben sich hier Zeitspannen von 2 bis 10 Minuten, insbesondere von mehr als 5 Minuten, bei einer Prozesstemperatur von 110 bis 120 °C herausgestellt.

Die Vernetzer (Epoxide oder Oxetane) und die Beschleuniger können auch beide kurz vor der Weiterverarbeitung des Polymers zugesetzt werden, also vorteilhaft in der Phase, wie sie vorstehend für die Beschleuniger dargestellt ist. Hierzu ist es vorteilhaft, das Vernetzer-Beschleuniger-System an ein- und derselben Stelle gleichzeitig in den Prozess eingebracht werden, auch als Epoxid- bzw. Oxetan-Beschleuniger-Abmischung.

Grundsätzlich ist es auch möglich, die Zugabezeitpunkte bzw. Zugabestellen an Vernetzer und Beschleuniger in den oben dargestellten Ausführungen zu vertauschen, so dass der Beschleuniger vor den epoxid- oder oxetangruppenhaltigen Substanzen zugesetzt werden kann.

Im Compoundierungsprozess beträgt die Temperatur des Polymerisats bei der Zugabe der Vernetzer und/oder der Beschleuniger zwischen 50 und 150 °C, bevorzugt zwischen 70 und 130 °C, besonders bevorzugt zwischen 80 und 120 °C.

Es hat sich herausgestellt, dass man den Vernetzer, also die epoxid- oder oxetangruppenhaltige Substanz, zu 0,1 - 5 Gew-%, bezogen auf das Polymer ohne Additive, hinzusetzt.

Vorteilhaft ist es, den Beschleuniger zu 0,05 - 5 Gew-%, bezogen auf das additivfreie Polymer, zuzugeben.

Es ist besonders vorteilhaft, wenn der Vernetzeranteil derart gewählt wird, dass ein elastischer Anteil der vernetzten Polyacrylate von mindestens 20 % resultiert. Bevorzugt beträgt der elastische Anteil mindestens 40 %, weiter bevorzugt mindestens 60 % (jeweils gemessen nach Messmethode H3; vgl. experimenteller Teil).

Prinzipiell kann die Zahl der funktionellen Gruppen, also insbesondere der Carbonsäuregruppen, derart gewählt werden, dass diese bezüglich der Epoxid- oder Oxetangruppen im Überschuss vorliegt, dass es im Polymer also nur hinreichend viele funktionelle Gruppen - also potentielle Vernetzungs- oder Verknüpfungsstellen im Polymer- gibt, um die gewünschte Vernetzung zu erzielen.

Für die Wirkung des erfindungsgemäßen Vernetzer-Beschleuniger-Systems, insbesondere in Hinblick auf das erfindungsgemäße Verfahren inklusive seiner Ausführungsvarianten, ist es besonders vorteilhaft, die Mengen an Beschleuniger und Vernetzer (epoxid- oder oxetangruppenhaltige Substanzen) aufeinander und gegebenenfalls auch auf die Menge an für die Vernetzungsreaktion reaktiven, funktionellen Gruppen im Polyacrylat abzustimmen und für das gewünschte Vernetzungsresultat zu optimieren (siehe hierzu auch die Ausführungen zu den entsprechenden Zusammenhängen und zur Steuerungsmöglichkeit des Verfahrens).

Zur Angabe der Verhältnisse der Bestandteile des Vernetzer-Beschleuniger-Systems zueinander kann insbesondere das Verhältnis der Anzahl der Epoxid- oder Oxetangruppen im Vernetzer zur Anzahl der reaktiven funktionellen Gruppen im Polymer herangezogen werden. Grundsätzlich kann dieses Verhältnis frei gewählt werden, so dass entweder ein Überschuss an funktionellen Gruppen, zahlenmäßige Gleichheit der Gruppen oder ein Überschuss an Epoxid- oder Oxetangruppen vorliegt.

Vorteilhaft wird dieses Verhältnis derart gewählt, dass die Epoxid- oder Oxetangruppen im Unterschuss (bis maximal anzahliger Gleichheit) vorliegen; ganz besonders bevorzugt liegt das Verhältnis der Gesamtzahl der Epoxid- oder Oxetangruppen im Vernetzer zur Anzahl der funktionellen Gruppen im Polymer im Bereich von 0,1 : 1 bis 1 : 1.

Eine weitere Kennzahl ist das Verhältnis der Anzahl beschleunigungswirksamer Gruppen im Beschleuniger zur Anzahl der Epoxid- oder Oxetangruppen im Vernetzer. Als beschleunigungswirksame Gruppen werden insbesondere die sekundären und/oder tertiären Amingruppen in den Dimeren oder Trimeren des Cyanamids bzw. in den Derivaten davon gerechnet. Auch dieses Verhältnis kann grundsätzlich frei gewählt werden, so dass entweder ein Überschuss an beschleunigungswirksamen Gruppen, zahlenmäßige Gleichheit der Gruppen oder ein Überschuss der cyklischen Ethergruppen vorliegt.

Es ist besonders vorteilhaft, wenn das Verhältnis der Anzahl beschleunigungswirksamer Gruppen im Beschleuniger zur Anzahl der Epoxid- oder Oxetangruppen im Vernetzer von 0,2 : 1 bis 4 : 1 beträgt.

Nach der Compoundierung der Masse erfolgt die Weiterverarbeitung des Polymers, insbesondere die Beschichtung auf einen permanenten oder auf einen temporären Träger (der permanente Träger verbleibt bei der Anwendung mit der Klebemassenschicht verbunden, während der temporäre Träger in dem weiteren Verarbeitungsprozess, zum Beispiel der Konfektionierung des Klebebandes, oder bei der Anwendung von der Klebemassenschicht wieder abgenommen wird).

Die Beschichtung der Selbstklebemassen kann mit dem Fachmann bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen, bevorzugt alle Walzen, die mit dem Polyacrylat in Berührung kommen. Es können in günstiger Vorgehensweise alle Walzen des Kalanders anti-adhäsiv ausgerüstet sein. Als anti-adhäsive Walzenoberfläche wird besonders bevorzugt ein Stahl-Keramik-Silikon-Verbundwerkstoff eingesetzt. Derartige Walzenoberflächen sind gegen thermische und mechanische Belastungen resistent.

Für den Fachmann überraschend hat es sich als besonders vorteilhaft gezeigt, wenn man Walzenoberflächen einsetzt, die eine Oberflächenstruktur aufweisen, insbesondere in der Art, dass die Fläche keinen vollständigen Kontakt zur zu verarbeitenden Polymerschicht herstellt, sondern dass die Kontaktfläche - verglichen mit einer glatten Walze - geringer ist. Besonders günstig sind strukturierte Walzen wie Metall-Rasterwalzen (beispielsweise Stahlrasterwalzen).

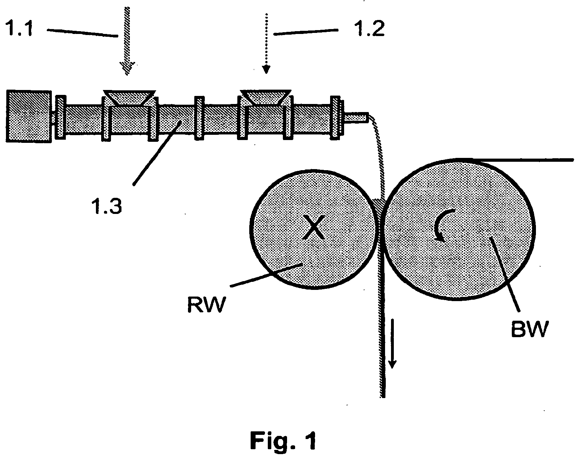

Die Beschichtung kann insbesondere vorteilhaft entsprechend der Beschichtungsverfahren, wie sie in der WO 2006/027387 A1 von Seite 12, Zeile 5 bis Seite 20, Zeile 13 dargestellt sind, und zwar insbesondere unter den Abschnitten "Variante A" (Seite 12), "Variante B" (Seite 13), "Variante C" (Seite 15), "Verfahren D" (Seite 17), "Variante E" (Seite 19) sowie die Figuren Fig. 1 bis 6. Die genannten Offenbarungsstellen aus der WO 2006/027387 A1 seien daher explizit in den Offenbarungsgehalt der vorliegenden Schrift eingeschlossen.

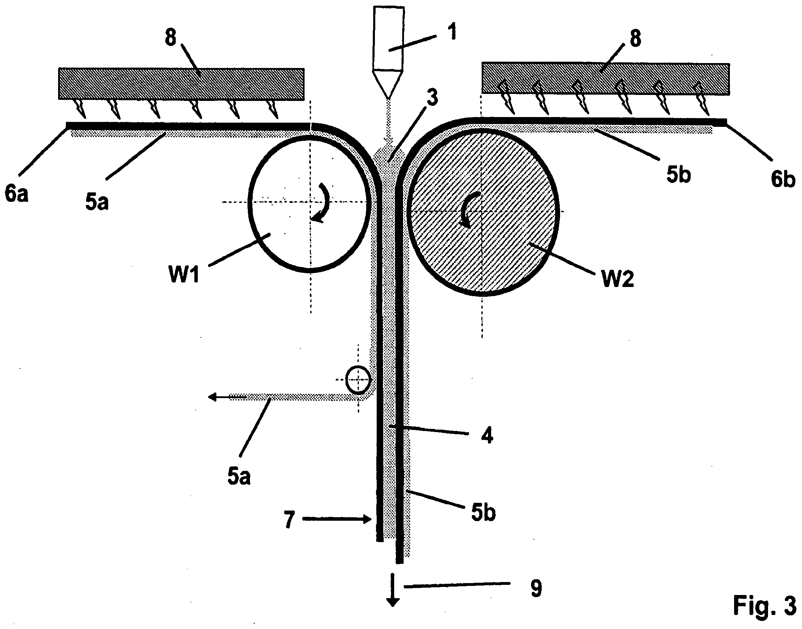

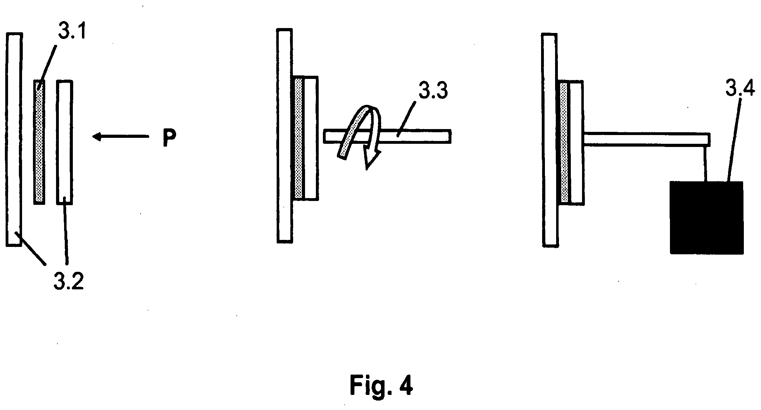

Besonders gute Ergebnisse werden bei den Zwei- und Dreiwalzenkalanderwerken (vgl. insbesondere Varianten B - Fig. 3, Variante C - Fig. 4 und Variante D - Fig. 4 der WO 2006/027387 A1) durch die Verwendung von Kalanderwalzen erzielt, die mit anti-adhäsiven Oberflächen ausgerüstet sind oder mit oberflächenmodifizierten Walzen, hier besonders vorteilhaft zu erwähnen sind Metall-Rasterwalzen. Diese Metall-Rasterwalzen, vorzugsweise Stahl-Rasterwalzen, weisen eine regelmäßig geometrisch unterbrochene Oberflächenstruktur auf. Dies gilt insbesondere vorteilhaft für die Überführungswalze ÜW. Diese Oberflächen tragen in besonders vorteilhafter Weise zu einem Gelingen des Beschichtungsverfahrens bei, da anti-adhäsive und strukturierte Oberflächen die Übertragung der Polyacrylatmasse selbst auf anti-adhäsiv ausgerüstete Trägeroberflächen ermöglichen. Verschiedene Arten anti-adhäsiver Oberflächenbeschichtungen können für die Kalanderwalzen verwendet werden. Als besonders geeignet haben sich auch hier zum Beispiel die bereits vorstehend genannten Metall-Keramik-Silikon-Verbundwerkstoffe PALLAS SK-B-012/5 der Fa. PALLAS OBERFLÄCHENTECHNIK GMBH, Deutschland sowie AST 9984-B der Fa. ADVANCED SURFACE TECHNOLOGIES, Deutschland, erwiesen.

Insbesondere die Überführungswalzen (ÜW) können dabei als Stahl-Rasterwalzen ausgebildet sein (vgl. Varianten B - Fig. 3, Variante C - Fig. 4 und Variante D - Fig. 4 der WO 2006/027387 A1). Besonders bevorzugt eingesetzt als Überführungswalze ÜW werden beispielsweise Stahl-Rasterwalzen mit der Bezeichnung 140 L/cm und einer Stegbreite von 10 $\mu$m, z.B. solche von der Firma Saueressig, Deutschland.

Bei der Beschichtung können insbesondere bei Einsatz der Mehrwalzenkalander Beschichtungsgeschwindigkeiten bis 300 m/min verwirklicht werden.

An Fig. 1 der vorliegenden Schrift ist beispielhaft, ohne sich dadurch einschränken zu wollen, der Compoundierungs- und Beschichtungsprozess anhand eines kontinuierlichen Ablaufs dargestellt. Die Polymere werden an der ersten Eingabestelle (1.1) in den Compounder (1.3), hier beispielsweise ein Extruder, gegeben. Entweder erfolgt die Eingabe bereits in der Schmelze, oder die Polymere werden im Compounder bis zur Schmelze erhitzt. Vorteilhaft werden an der ersten Eingabestelle mit dem Polymer die epoxid- oder oxetanhaltigen Verbindungen in den Compounder gegeben.

Kurz vor der Beschichtung werden an einer zweiten Eingabestelle (1.2) die Beschleuniger zugesetzt. Dies hat den Erfolg, dass die Beschleuniger den epoxid- oder oxetanhaltigen Polymeren erst kurz vor der Beschichtung zugesetzt werden und die Reaktionszeit in der Schmelze gering ist.

Die Reaktionsführung kann auch diskontinuierlich erfolgen. In entsprechenden Compoundem wie beispielsweise Reaktorkesseln kann die Zugabe der Polymere, der Vernetzer und der Beschleuniger zeitversetzt und nicht, wie in der Fig. 1 dargestellt, ortsversetzt stattfinden.

Direkt nach der Beschichtung - bevorzugt mittels Walzenauftrag oder mittels Extrusionsdüse - ist das Polymer nur leicht anvernetzt, aber noch nicht ausreichend vernetzt. Die Vernetzungsreaktion verläuft vorteilhaft auf dem Träger.

Nach der Beschichtung kühlt die Polymermasse relativ rasch aus, und zwar bis auf die Lagerungstemperatur, in der Regel auf Raumtemperatur. Das erfindungsgemäße Vernetzer-Beschleuniger-System ist geeignet, ohne die Zufuhr von weiterer thermischer Energie (ohne Wärmezufuhr) die Vernetzungsreaktion voranschreiten zu lassen.

Die Vernetzungsreaktion zwischen den funktionellen Gruppen des Polyacrylats und den Epoxiden bzw. Oxetanen mittels des erfindungsgemäßen Vernetzer-Beschleuniger-System verläuft auch ohne Wärmezufuhr bei Normalbedingungen (Raumtemperatur) vollständig ab. In der Regel ist nach einer Lagerzeit von 5 bis 14 Tagen die Vernetzung so weit abgeschlossen, dass ein funktionsfähiges Produkt (insbesondere ein Klebeband oder eine funktionsfähige Trägerschicht auf Basis des Polyacrylates) vorliegt. Der Endzustand und damit die endgültige Kohäsion des Polymers wird je nach Wahl des Polymers und des Vernetzer-Beschleuniger-Systems nach einer Lagerung von insbesondere 14 bis 100 Tagen, in vorteilhafter Weise nach 14 bis 50 Tagen Lagerungszeit bei Raumtemperatur erreicht, bei höherer Lagerungstemperatur erwartungsgemäß früher.

Durch die Vernetzung erhöhen sich die Kohäsion des Polymers und damit auch die Scherfestigkeit. Die Verknüpfungen sind sehr stabil. Dies ermöglicht sehr alterungsstabile und wärmebeständige Produkte wie Klebebänder, viskoelastische Trägermaterialien oder Formkörper.

Die physikalischen Eigenschaften des Endproduktes, insbesondere dessen Viskosität, Klebkraft und Anfassklebrigkeit, können durch den Grad der Vernetzung beeinflusst werden, so dass sich durch geeignete Wahl der Reaktionsbedingungen das Endprodukt optimieren lässt. Diverse Faktoren bestimmen das Prozessfenster dieses Verfahrens. Die wichtigsten Einflussgrößen sind die Mengen (Konzentrationen und Verhältnisse zueinander) und die chemischen Beschaffenheiten der Vernetzer und der Beschleuniger, die Prozess- und Beschichtungstemperatur, die Verweilzeit in Compoundierer (insbesondere Extruder) und im Beschichtungsaggregat, Anteil an funktionellen Gruppen (insbesondere Säuregruppen und/oder Hydroxygruppen) im Polymerisat sowie das mittlere Molekulargewicht des Polyacrylats.

Im Folgenden werden einige Zusammenhänge bei der Herstellung der erfindungsgemäß vernetzten Selbstklebemasse beschrieben, die das Verfahren zur Herstellung näher charakterisieren, aber nicht einschränkend für den erfindungsgemäßen Gedanken gemeint sind.

Das erfindungsgemäße Verfahren bietet in hervorragender, nicht zu erwartender Weise den Vorteil, dass ein stabiler Vernetzungsprozess für Polyacrylate angeboten werden kann, und zwar mit hervorragender Steuerungsmöglichkeit bezüglich des Vernetzungsbildes durch weitgehende Entkoppelung von Vernetzungsgrad und Reaktivität (Reaktionskinetik). Die zugesetzte Vernetzermenge (Epoxid- bzw. Oxetanmenge) beeinflusst dabei weitgehend den Vernetzungsgrad des Produktes, der Beschleuniger steuert weitgehend die Reaktivität.

Es konnte festgestellt werden, dass sich durch die Menge der zugesetzten epoxid- oder oxetanhaltigen Substanzen der Vernetzungsgrad vorwählen ließ, und zwar weitgehend unabhängig von den sonst gewählten Verfahrensparametern Temperatur und Menge an zugesetztem Beschleuniger.

Wie sich für den Einfluss der Epoxidgruppenkonzentration bzw. der Oxetangruppenkonzentration zeigt, steigt der Endwert des Vernetzungsgrades mit ansteigender Epoxidkonzentration an, während die Reaktionskinetik nahezu unbeeinflusst bleibt.

Weiterhin wurde festgestellt, dass die zugesetzte Menge an Beschleuniger direkten Einfluss auf die Vernetzungsgeschwindigkeit, also auch den Zeitpunkt des Erreichens des End-Vernetzungsgrades hatte, ohne diesen aber absolut zu beeinflussen. Dabei kann die Reaktivität der Vernetzungsreaktion so gewählt werden, dass die Vernetzung auch bei der Lagerung des fertigen Produktes bei den dort üblichen Bedingungen (Raumtemperatur) innerhalb weniger Wochen zu dem gewünschten Vernetzungsgrad führt, insbesondere ohne dass noch thermische Energie (aktiv) zugeführt werden müsste oder dass das Produkt weiter behandelt werden müsste.

Für die Abhängigkeit der Vernetzungszeit bei gleich bleibender Temperatur in Abhängigkeit von der Beschleunigerkonzentration zeigt sich, dass der Endwert des Vernetzungsgrades nahezu konstant bleibt (bei der geringsten Reaktion ist dieser Wert noch nicht erreicht); dieser Wert bei hohen Beschleunigerkonzentrationen aber schneller erreicht wird als bei niedrigen Beschleunigerkonzentrationen.

Zusätzlich zu den vorgenannten Parametern kann die Reaktivität der Vernetzungsreaktion auch durch Variation der Temperatur beeinflusst werden, wenn dies gewünscht ist, insbesondere in den Fällen, wo der Vorteil der "Eigenvernetzung" während der Lagerung bei üblichen Bedingungen keine Rolle spielt. Bei gleich bleibender Vernetzerkonzentration führt eine Erhöhung der Prozesstemperatur zu einer verringerten Viskosität, dies verbessert die Beschichtbarkeit der Masse, reduziert jedoch die Verarbeitungszeit.

Eine Erhöhung der Verarbeitungszeit erhält man durch Verringerung der Beschleunigerkonzentration, Erniedrigung des Molekulargewichts, Verringerung der Konzentration an funktionellen Gruppen im Polymerisat, Verringerung des Säureanteils im Polymerisat, Verwendung von weniger reaktiven Vernetzern (Epoxiden oder Oxetane) bzw. weniger reaktiven Vernetzer-Beschleuniger-Systemen und Verringerung der Prozesstemperatur.

Eine Kohäsionsverbesserung der Masse kann man durch unterschiedliche Wege erhalten. Entweder wird die Beschleunigerkonzentration erhöht, was die Verarbeitungszeit reduziert. Man kann bei gleich bleibender Beschleunigerkonzentration auch das Molekulargewicht des Polyacrylats erhöhen, was möglicherweise effizienter ist. Im erfindungsgemäßen Sinne ist jedenfalls vorteilhaft, die Vernetzerkonzentration (epoxid-oder oxetangruppenhaltige Substanzen) zu erhöhen. Je nach gewünschtem Anforderungsprofil der Masse bzw. des Produktes müssen die oben genannten Parameter in geeigneter Weise angepasst werden.

## Vorteilhafte Anwendungen

Die erfindungsgemäß hergestellten Polyacrylate können für breitgefächerte Anwendungen eingesetzt werden. Nachstehend seien einige besonders vorteilhafte Einsatzgebiete beispielhaft dargestellt.

Das mit dem erfindungsgemäßen Verfahren hergestellte Polyacrylat wird insbesondere als Haftklebemasse verwendet, bevorzugt als Haftklebemasse für ein Klebeband, wobei die Acrylathaftklebemasse als ein- oder doppelseitiger Film auf einer Trägerfolie vorliegt. Insbesondere gut geeignet sind diese Polyacrylate, wenn ein hoher Masseauftrag in einer Schicht gefordert ist, da mit diesem Beschichtungsverfahren ein nahezu beliebig hoher Masseauftrag, bevorzugt mehr als 100 $g/m^2$, besonders bevorzugt mehr als 200 $g/m^2$, möglich ist, und zwar insbesondere bei gleichzeitig besonders homogener Vernetzung durch die Schicht hindurch. Günstige Anwendungen, ohne Anspruch auf Vollständigkeit, sind beispielsweise technische Klebebänder, insbesondere für den Einsatz im Bauwesen, z.B. Isolierbänder, Korrosionsschutzbänder, Aluminiumklebebänder, gewebeverstärkte Folienklebebänder (Duct-Tapes), Bauspezialklebebänder, z.B. Dampfsperren, Montageklebebänder, Kabelwickelbänder, selbstklebende Folien und/oder Papieretiketten.

Das erfindungsgemäß hergestellte Polyacrylat kann auch als Haftklebemasse für ein trägerloses Klebeband, als ein sogenanntes Transferklebeband, angeboten werden. Auch hier ist der nahezu beliebig hoch einstellbare Masseauftrag bei gleichzeitig besonders homogener Vernetzung durch die Schicht hindurch besonders vorteilhaft. Bevorzugte Flächengewichte sind mehr als 10 $g/m^2$ bis 5000 $g/m^2$, besonders bevorzugt 100 $g/m^2$ bis 3000 $g/m^2$.

Das erfindungsgemäß hergestellte Polyacrylat kann auch als Heißsiegelklebemasse in Transferklebebändern oder in ein- oder doppelseitigen Klebebändern vorliegen. Auch hier kann für trägerhaltige Haftklebebänder der Träger ein erfindungsgemäß erhaltenes viskoelastisches Polyacrylat sein.

Eine vorteilhafte Ausführungsform der entsprechend erhaltenen Klebebänder kann in vorteilhafter Weise als stripfähiges Klebeband verwendet werden, insbesondere derart, dass es durch Zug im Wesentlichen in der Verklebungsebene rückstandsfrei wieder abgelöst werden kann.

Das erfindungsgemäße Verfahren eignet sich auch besonders gut zur Herstellung von dreidimensionalen haftklebrigen oder auch nicht haftklebrigen Formkörpern. Ein besonderer Vorteil dieses Verfahrens ist, dass eine Schichtdickenbegrenzung des zu vernetzenden, auszuformenden Polyacrylats im Gegensatz zu UV- und ESH härtenden Verfahren nicht vorhanden ist. Entsprechend der Wahl des Beschichtungs- oder Ausformungsaggregate lassen sich somit beliebig geformte Gebilde herstellen, die dann unter milden Bedingungen zu gewünschter Festigkeit nachvernetzen können.

Besonders geeignet ist dieses Verfahren auch zur Herstellung besonders dicker Schichten, insbesondere von Haftklebeschichten oder viskoelastischen Acrylatschichten mit einer Dicke oberhalb von 80 $\mu$m. Derartige Schichten sind mit der Lösemitteltechnik schlecht herstellbar (Blasenbildung, sehr langsame Beschichtungsgeschwindigkeit, Kaschieren dünner Schichten übereinander ist aufwendig und birgt Schwachstellen). Dicke Haftklebeschichten können beispielsweise ungefüllt als Reinacrylat oder harzabgemischt oder mit organischen oder anorganischen Füllstoffen gefüllt vorliegen. Auch nach den bekannten Verfahren offenzellig oder geschlossenzellig geschäumte Schichten sind möglich. Als Methode zur Schäumung ist die Schäumung über komprimierte Gase wie Stickstoff oder $CO_2$ möglich, oder die Schäumung über Blähmittel wie Hydrazine oder expandierbare Mikroballons. Im Falle der Verwendung von expandierenden Mikroballons wird die Masse bzw. die ausgeformte Schicht vorteilhaft in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien zu glätten. Zur Herstellung schaumanaloger Schichten können dem haftklebrigen thermisch vernetzten Acrylatschmelzhaftkleber auch Glashohlkugeln oder bereits expandierte polymere Mikroballons zugesetzt werden.

Insbesondere können mit diesem Verfahren auch dicke Schichten hergestellt werden, die als Trägerschicht für beidseitig mit Haftklebemasse beschichtete Klebebänder verwendet werden können, insbesondere bevorzugt gefüllte und geschäumte Schichten, die als Trägerschichten für schaumartige Klebebänder genutzt werden können. Auch bei diesen Schichten ist es sinnvoll, dem Polyacrylat vor dem Zusatz des Vernetzer-Beschleuniger-Systems oder des Vernetzers oder des Beschleunigers Glasvollkugeln, Glashohlkugeln oder expandierende Mikroballons zuzusetzen. Im Falle der Verwendung von expandierenden Mikroballons wird die Masse bzw. die ausgeformte Schicht in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien oder durch das Zukaschieren einer auf ein Trennmaterial beschichteten Haftklebemasse zu glätten. Zu einer derartigen schaumartigen, viskoelastischen Schicht kann mindestens einseitig eine Haftklebeschicht zukaschiert werden. Bevorzugt wird beidseitig eine Corona-vorbehandelte Polyacrylatschicht zukaschiert. Es können alternativ anders vorbehandelte Klebeschichten, also Haftklebeschichten und/oder hitzeaktivierbare Schichten auf der Basis anderer Polymere als auf Acrylatbasis zu der viskolelastischen Schicht zukaschiert werden. Geeignete Basispolymere sind Klebemassen auf Basis von Naturkautschuk, Synthesekautschuke, Acrylatblockcopolymere, Styrolblockcopolymere, EVA, bestimmte Polyolefine, spezielle Polyurethane, Polyvinylether, und Silikone. Bevorzugt sind jedoch Massen, die keine nennenswerten Anteils an migrierfähigen Bestandteilen haben, die mit dem Polyacrylat so gut verträglich sich, dass in signifikanter Menge in die Acrylatschicht eindiffundieren und dort die Eigenschaften verändern.

Statt beidseitig eine Haftklebeschicht zu kaschieren, kann auch mindestens einseitig eine Schmelzklebeschicht oder thermisch aktivierbare Klebschicht verwendet werden. Derartige asymmetrische Klebbänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

Ein besonderer Vorteil der thermisch vernetzten Polyacrylate besteht darin, dass diese Schichten, ob als viskoelastischer Träger, als Haftklebemasse oder als Heißsiegelmasse genutzt, bei gleicher Oberflächengüte kein Vernetzungsprofil durch die Schicht (bzw. entsprechend die aus den Polyacrylaten hergestellten Formkörper) - insbesondere im Gegensatz zu UV- und ESH-vernetzten Schichten - zeigen. Dadurch lässt sich die Balance zwischen adhäsiven und kohäsiven Eigenschaften durch die Vernetzung ideal für die gesamte Schicht steuern und einstellen. Bei strahlenchemisch vernetzten Schichten hingegen ist immer eine Seite oder eine Teilschicht über- oder untervernetzt.

## Experimenteller Teil

Die folgenden beispielhaften Experimente sollen die Erfindung näher erläutern, ohne dass durch die Wahl der angegebenen Beispiele die Erfindung unnötig eingeschränkt werden soll.

Messmethoden (allgemein):

Feststoffgehalt (Messmethode A1):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert (nach FIKENTSCHER)(Messmethode A2):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC (Messmethode A3);

Die Angaben des gewichtsmittleren Molekulargewichtes $M_w$ und der Polydispersität PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25°C. Als Vorsäule wird eine Säule Typ PSS-SDV, 5 $\mu$, $10^3$ Å, ID 8,0 mm· 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Messmethoden (insbesondere Haftklebemassen):

180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180 ° vom Substrat abgezogen. Alle Messungen wurden bei Raumtemperatur durchgeführt.
Die Messergebnisse sind in N/cm angegeben und sind gemittelt aus drei Messungen. Analog wurde die Klebkraft auf Polyethylen (PE) bestimmt.

Scherstandzeit Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.
Bei Raumtemperatur wurde ein Gewicht von 1 kg an dem überstehenden Ende des Klebebandes befestigt. Die Messung wird bei Normalklima (23 °C, 55 % Luftfeuchtigkeit) und bei 70 °C in einem Wärmeschrank durchgeführt.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13mm · 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)·100 / max].

Messmethoden (insbesondere Dreischichtenaufbauten):

90° Klebkraft Stahl : offene und abgedeckte Seite (Messmethode V1):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Dreischichtverbundes wurde dann mit einer 50 $\mu$m Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle 5 mal hin und her, bei einer Aufrollgeschwindigkeit von 10 m/min, überrollt. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 $\mu$m Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Scherstandzeit - offene und abgedeckte Seite (Messmethode V2):

Die Musterpräparation erfolgte in einem Prüfklima von 23 °C +/- 1°C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm · 13 mm (Länge · Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 $\mu$m Aluminiumfolie verstärkt und mit einer 2 kg Rolle 2 mal hin und her überrollt. Anschließend wurde eine Gurtschlaufe am überstehenden Ende des Dreischichtverbundes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179° +/- 1 ° belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 $\mu$m Aluminiumfolie verstärkt, das Trennmaterial entfernt und auf die Prüfplatte analog der Beschreibung geklebt. Die Messung wird bei Normalklima (23 °C, 55 % Luftfeuchtigkeit) durchgeführt.

Wandhakentest (Messmethode V3):

Fig. 4 zeigt die Herstellung der Polyacrylathaftklebeschichten (Schicht A und/oder C). Ein zwischen zwei polierten Stahlplatten (3.2) fixiertes Prüfmuster (3.1) der Größe 30 mm · 30 mm wird 1 Minute lang mit 0,9 kN angedrückt (Kraft P). Danach wird ein 9 cm langer Hebelarm (3.3) in die oberste Stahlplatte eingeschraubt und dieser anschließend mit einem 1000 g Gewicht (3.4) belastet. Es wird darauf achtgegeben, dass die Zeit zwischen Andrücken und Belasten nicht mehr als zwei Minuten beträgt (t $\leq$ 2 min).

Gemessen wird die Haltezeit, d.h. die Zeit zwischen dem Aufhängen und Abfallen des Musters. Als Ergebnis wird die Haltezeit in Minuten als Mittelwert einer Dreifachbestimmung angegeben. Das Prüfklima beträgt 23°C +/- 1 °C und 50 % r.F. +/- 5 % r.F (r.F. relativer Feuchte).

Es wurde jeweils die offene und die abgedeckte Seite gemessen.

Kommerziell erhältliche, eingesetzte Chemikalien

| Chemische Verbindung | Handelsname | Hersteller | CAS-Nr. |
|---|---|---|---|
| Bis-(4-*tert*-butylcyclohexyl)peroxydicarbonat | Perkadox® 16 | Akzo Nobel | 15520-11-3 |
| 2,2'-Azobis(2-methylpropionitril), AIBN | Vazo® 64 | DuPont | 78-67-1 |
| Klebharz auf Terpen-Phenolbasis (Erweichungspunkt 110 °C, Hydroxylwert 45-60) | Dertophene® T110 | DRT, Frankreich | 73597-48-5 |
| Pentaerythrittetraglycidether | Polypox® R16 Denacol™ EX-411 | UPPC AG Nagase Chemtex Corp. | 3126-63-4 |

(fortgesetzt)

| Chemische Verbindung | Handelsname | Hersteller | CAS-Nr. |
|---|---|---|---|
| 3,4-Epoxycyclohexylmethyl-3,4-epoxycyclohexancarboxylat | Cyracure™ UVR 6105 | Dow Chem Corp. | 2386-87-0 |
| Bis[1-ethyl(3-oxetanyl)]methylether | Aron Oxetane OXT-221 | ToaGosei Inc. | 18934-00-4 |
| Dicyandiamid | Dyhard® 100SF Amicure™ CG-1200 | Evonik Industries Air Products, USA | 461-58-5 |
| 6-Phenyl-1,3,5-triazin-2,4-diyldiamin | Benzoguanamin | AlzChem | 91-76-9 |
| 2,4,6-Trimercapto-1,3,5-triazin | Taicros®-TMT | Evonik Industries | 638-16-4 |
| Isopropyliertes Triarylphosphat | Reofos® 65 | Great Lakes, USA | 68937-41-7 |
| Hohlglaskugeln (Dichte 0,28 g/cm$^3$; Schüttdichte 0,16 g/cm$^3$, Partikeldurchmesser 5-115 $\mu$m [Range]; 65 $\mu$m [Durchschnittswert]) | Q-Cel® Hollow Glass Spheres 5028 | Potters Industries | |
| Kreide (Dichte 2,74 g/cm$^3$, Schüttdichte 0,56 g/cm$^3$, ph-Wert 8,8 - 9,5, Löslichkeit [Wasser] 16 mg/l, Zersetzungspunkt 900 °C) | Mikrosöhl® 40 | Vereinigte Kreidewerke Dammann KG | 1317-65-3 |
| Thermoplastische Mikrohohlkugeln (Partikelgröße 10 -17 $\mu$m; Dichte max. 0,017 g/cm$^3$; Expansionstemperatur 127 -139 °C [Start]; 164 -184 °C [max. Exp.]) | Expancel® 092 DU 40 | Akzo Nobel | |
| alle Spezifikationsangaben bei 20 °C; | | | |

Beispiele Haftkleber

Herstellung der Ausgangspolymere für die Beispiele PSA B1 bis B8

Im Folgenden wird die Präparation der Ausgangspolymere beschrieben. Die untersuchten Polymere werden konventionell über eine freie radikalische Polymerisation in Lösung hergestellt.

Basispolymer P1

Ein für radikalische Polymerisationen konventioneller Reaktor wurde mit 45 kg 2-Ethylhexylacrylat, 45 kg n-Butylacrylat, 5 kg Methylacrylat, 5 kg Acrylsäure und 66 kg Aceton/Isopropanol (92,5:7,5) befüllt. Nach 45minütiger Durchleitung von Stickstoffgas unter Rühren wurde der Reaktor auf 58°C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden emeut 50 g AIBN zugegeben und nach 4 h wurde mit 20 kg Aceton/Isopropanol Gemisch verdünnt.

Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,6 %, einen K-Wert von 59, einen Feststoffgehalt von 54 %, ein mittleres Molekulargewicht von Mw = 557.000 g/mol, Polydispersität PD (Mw/Mn) = 7,6.

Basispolymer P2

Ein für radikalische Polymerisationen konventioneller Reaktor wurde mit 47,5 kg 2-Ethylhexylacrylat, 47,5 kg n-Butylacrylat, 5 kg Acrylsäure, 150 g Dibenzoyltrithiocarbonat und 66 kg Aceton befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75°C erwärmt und die Reaktion konstant bei dieser Außentemperatur durchgeführt. Nach 1 h wurden erneut 50 g AIBN zugegeben. Nach 4 h verdünnte man mit 10 kg Aceton. Nach 5 und nach 7 h erfolgte eine Zugabe von jeweils 150 g Bis-(4-*tert*-butylcyclohexyl)peroxydicarbonat. Nach 22 h Reaktionszeit wurde die Polymerisation abgebrochen und auf Raumtemperatur abgekühlt.

Das Polyacrylat hat einen Umsatz von 99,5 %, einen K-Wert von 41,9, einen Feststoffgehalt von 56,5 %, ein mittleres Molekulargewicht von Mw = 367.000 g/mol, Polydispersität PD (Mw/Mn) = 2,8.

Basispolymer P3

Analog Beispiel P1 wurden 41,5 kg 2-Ethylhexylacrylat, 41,5 kg n-Butylacrylat, 15 kg Methylacrylat, 1 kg Acrylsäure und 1 kg 2-Hydroxyethylmethacrylat (HEMA) in 66 kg Aceton/Isopropanol (92,5:7,5) polymerisiert. Initiiert wurde zweimal mit jeweils 50 g AIBN, zweimal mit jeweils 150 g Bis-(4-*tert*-butylcyclohexyl)peroxydicarbonat und verdünnt mit 20 kg Aceton/Isopropanol Gemisch (92,5:7,5). Nach 22 h Reaktionszeit wurde die Polymerisation abgebrochen und auf Raumtemperatur abgekühlt.

Das Polyacrylat hat einen Umsatz von 99,6 %, einen K-Wert von 69,5, einen Feststoffgehalt von 53,3 %, ein mittleres Molekulargewicht von Mw = 689.000 g/mol, Polydispersität PD (Mw/Mn) = 7,8.

Basispolymer P4

Analog Beispiel P1 wurden 68 kg 2-Ethylhexylacrylat, 25 kg Methylacrylat und 7 kg Acrylsäure in 66 kg Aceton/Isopropanol (92,5:7,5) polymerisiert.

Das Polyacrylat hat einen Umsatz von 99,7 %, einen K-Wert von 51, einen Feststoffgehalt von 55,0 %, ein mittleres Molekulargewicht von Mw = 657.000 g/mol, Polydispersität PD (Mw/Mn) = 8,2.

Verfahren 1: Aufkonzentration /Herstellung der Schmelzhaftkleber:

Die Acrylatcopolymere (Basispolymere P1 bis P4) werden mittels Einschneckenextruder (Aufkonzentrationsextruder, BERSTORFF GmbH, Deutschland) weitestgehend vom Lösemittel befreit (Restlösemittelgehalt ≤ 0,3 Gew.-%; vgl. bei den einzelnen Beispielen). Exemplarisch sind hier die Parameter der Aufkonzentration des Basispolymeren P1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an 3 verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Verfahren 2: Herstellung der modifizierten Schmelzhaftkleber und viskoelastischen Träger

Die nach dem oben erläuterten Verfahren 1 hergestellten Acrylatschmelzhaftkleber wurden direkt in einen nachgeschalteten WELDING-Doppelschneckenextruder (WELDING

Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene® T110 in Zone 1 zudosiert und homogen eingemischt. Bei der Masse für die Beispiele MT 1 und MT 2 wurde kein Harz zudosiert. Bei den Beispielen MT 3, MT 4 und MT 5 wurde über das Feststoffdosiersystem die entsprechenden Zuschlagstoffe zudosiert und homogen eingemischt. Exemplarisch sind hier für die Harzcompoundierung mit dem Basispolymer P1 die Parameter dargelegt. Drehzahl betrug 451 U/min, der Motorstrom 42 A, es wurde ein Durchsatz von 30,1 kg/h realisiert. Die Temperaturen der Zonen 1 und 2 betrugen jeweils 105°C, die Schmelzetemperatur in Zone 1 betrug 117°C und die Massetemperatur bei Austritt (Zone 3) bei 100°C.

Verfahren 3: Herstellung der erfindungsgemäßen Klebebänder, Abmischung mit dem Vernetzer-Beschleuniger-System für die thermischen Vernetzung und Beschichtung

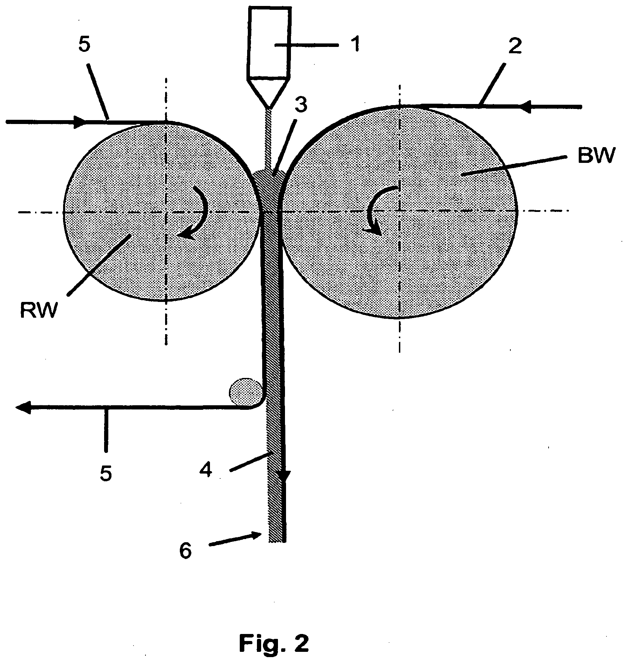

Die nach den Verfahren 1 - 2 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich für dem de und mischende Elemente abwechseln. Die Zugabe der jeweiligen Vernetzer und Beschleuniger erfolgt mit geeignetem Dosierequipment gegebenenfalls an mehreren Stellen (Fig.1: Dosierstellen 1.1 und 1.2) und gegebenenfalls unter Verwendung von Dosierhilfsmitteln in die druckfreien Förderzonen des Doppelschneckenextruders. Nach Austritt der fertig compoundierten, d.h. mit dem Vernetzer-Beschleuniger-System abgemischten Klebmasse aus dem Doppelschneckenextruder (Austritt: Runddüse, 5 mm Durchmesser), erfolgt die Beschichtung nach Fig. 2 auf ein bahnförmiges Trägermaterial (Die zwei Walzen (W1) und (W2) sind derart angeordnet, dass sie einen Spalt bilden, in welchen die Selbstklebemasse (3) beispielsweise mittels einer Verteilerdüse (1) eingebracht wird. Die erste Walze (BW) ["Beschichtungswalze"] führt den Träger (2), auf den die Selbstklebemasse (3) beschichtet werden soll. Die zweite Walze (RW) ["Rakelwalze"] führt einen antiadhäsiv ausgerüsteten Hilfsträger (5) und presst mittels des Hilfsträgers auf die Klebemasse, so dass diese auf den Träger (2) als Schicht (4) abgelegt wird. An der Position (6) wird der antiadhäsiv ausgerüstete Hilfsträger (5) von der Selbstklebemassenschicht (4) wieder abgenommen, und das Klebeband (6) bestehend aus der Klebemassenschicht (4) auf dem Träger (2) wird aus der Beschichtungsanlage herausgeführt.)

Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer-Beschleuniger-System abgemischte Klebmasse bzw. die viskoelastische Trägerschicht mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben.

In den nachfolgenden Beispielen und in den Tab.1 bis Tab.3 werden die eingesetzten Formulierungen, die Herstellparameter und die erzielten Eigenschaften jeweils näher beschrieben.

Beispiel B1

Das Basispolymer P1 wird gemäß dem beschriebenen Polymerisationsverfahren polymerisiert, gemäß Verfahren 1 aufkonzentriert (Feststoffgehalt 99,8 %) und anschließend gemäß Verfahren 2 mit Harz Dertophene® T110 abgemischt. Diese harzmodifizierte Acrylat-Hotmeltmasse wurde dann gemäß Verfahren 3 kontinuierlich mit dem Vernetzer-Beschleuniger-System bestehend aus einem

- Pentaerythrittetraglycidether, hier Polypox® R16 der Fa. UPPC AG, Deutschland (Epoxid) und

- Dicyandiamid,
  hier Dyhard® 100SF der Fa. EVONIK INDUSTRIES, Deutschland (dimeres Cyanamid)

compoundiert.

Detaillierte Beschreibung: In dem in Verfahren 3 beschriebenen Doppelschneckenextruder wurde ein Gesamtmassestrom bestehend aus 70 Teilen Polymer P1 und 30 Teilen Harz Dertophene® T110 von 533,3 g/min (das entspricht 373 Gramm des reinen Polymers pro Minute) mit 0,92 g/min des Epoxidvernetzers Pentaerythrittetraglycidether (entspricht 0,25 Gew.-% auf Polymer) und 1,15 g/min des Beschleunigers basierend auf dem Dimer des Cyanamids (entspricht 0,31 Gew.% auf Polymer) abgemischt. Die Dosierung des Dicyandiamids und des Epoxids erfolgt separat über zwei Schlauchpumpen an Dosierstelle 1.1 (siehe Fig.1). Zur Verbesserung der Dosierfähigkeit und der erreichbaren Mischgüte wurde das verwendete Vernetzersystem mit dem flüssigen Phophatester (Isopropyliertes Triarylphosphat; Reofos 65; Fa. GREAT LAKES, USA) verdünnt (Verhältnis zum Vernetzer 0,5:1). Die Prozessparameter sind in Tab. 2 zusammengefasst.

Die Verarbeitungszeit des fertigen Compounds war größer 7 min bei einer durchschnittlichen Massetemperatur von 125°C nach dem Verlassen des LEISTRITZ-Doppelschneckenextruders. Die Beschichtung erfolgt an einem 2-Walzenauftragswerk gemäß Fig. 2 bei Walzenoberflächentemperaturen von jeweils 100 °C und einem Masseauftrag von 90 g/m$^2$ auf 23 $\mu$m PET-Folie. Von dem so hergestellten Klebeband wurden die Klebkraft auf Stahl bei Raumtemperatur und Mikroschwerwege bei 40 °C in Abhängigkeit der Lagerungsdauer gemessen. Nach 18 Tagen Raumtemperaturlagerung wird der maximale Mikroscherweg mit 180 $\mu$m bei einem elastischen Anteil von 79 % gemessen. Weitere klebtechnische Daten des Beispiels B1 sind in Tabelle 3 zusammengefasst. Mit diesem Beispiel wird gezeigt, dass sehr leistungsfähige Klebebänder hergestellt werden können, die sich unter anderem durch gute Klebkräfte auf polaren und unpolaren Substraten (Stahl und Polyethlyen) und gute kohäsive Eigenschaften auch unter Temperatureinfluss auszeichnen.

Beispiel B2

Das gemäß Verfahren 1 aufkonzentrierte und gemäß Verfahren 2 mit Harz Dertophene® T110 abgemischte Basispolymer P2 (Restlösemittelanteil: 0,1 Gew.-%) wurde analog Beispiel B1 nach Verfahren 3 im Doppelschneckenextruder mit dem Vernetzer-Beschleuniger-System compoundiert und beschichtet.

Das Vernetzer-Beschleuniger-System besteht aus

- 3,4-Epoxycyclohexylmethyl-3,4-epoxycyclohexancarboxylat,

hier Cyracure™ UVR 6150, Fa. DOW CHEMICAL CORP. (Epoxid)
und

- 2,4,6-Trimercapto-1,3,5-triazin,
hier Taicros®-TMT der Fa. EVONIK INDUSTRIES, Deutschland (Beschleuniger).

Analog Beispiel B1 wurden 0,88 Gew.% des difunktionellen Epoxides 3,4-Epoxycyclohexylmethyl-3,4-epoxycyclohexancarboxylat und 0,42 Gew.% des Beschleunigers 2,4,6-Trimercapto-1,3,5-triazin (jeweils bezogen auf Acrylatcopolymer) gemäß Verfahren 3 zugesetzt. Die Extruderdrehzahl des LEISTRITZ-Doppelschneckenextruders betrug 125 Umdrehungen pro Minute, der Massedurchsatz 16,4 kg/h. Die Verarbeitungszeit betrug mehr als 5 min bei einer effektiven Massetemperatur von 108 °C nach dem Verlassen des Extruders. Mittels Walzenauftragswerk gemäß Fig. 2 wurden mit einem Masseauftrag von 105 g/m$^2$ auf 23 $\mu$m PET-Folie beschichtet.
Von dem so hergestellten Klebeband wurden Klebkraft-, Scherstandzeiten und Mikroschwerwegmessungen in Abhängigkeit von der Lagerungsdauer der Muster bei Raumtemperatur durchgeführt. Nach 21 Tagen Raumtemperaturlagerung wurden Scherteststandzeiten größer 10.000 min bei Raumtemperatur gemessen. Dieses Klebebandmuster wurde stark vernetzt, erkennbar an der sehr geringen maximalen Scherstrecke von nur 70 $\mu$m und einem hohen elastischen Anteil von 90 % gemäß Messmethode H3 "Mikroscherweg." Die Klebkraft auf Polyethlyen (PE) ist mit 2,4 N/cm erwartungsgemäß gering. Weitere klebtechnische Daten sind in Tabelle 3 unter Beispiel B2 aufgelistet.

Beispiel B3

Die Polymerisation des verwendeten Polymers P3, die Aufkonzentration, die Harzabmischung und das Einarbeiten des Vernetzer-Beschleuniger-Systems und die Beschichtung erfolgt im Wesentlichen wie in Beispiel 1 beschrieben.
Das hier verwendete Vernetzungssystem besteht aus

- Bis[1-ethyl(3-oxetanyl)]methylether,
hier Aron Oxetane OXT-221 der Fa. ToaGosei, Japan (Oxetan)
und
- Dicyandiamid,
hier Dyhard® 100SF der Fa. EVONIK INDUSTRIES, Deutschland (dimeres Cyanamid).

Analog Beispiel B1 wurden 0,52 Gew.% des multifunktionellen Epoxides Pentaerythrittetraglycidether und 0,52 Gew.% Dicyandiamid (jeweils bezogen auf Acrylatcopolymer) zugesetzt. Dieses gegenüber den Beispielen B1 und B2 verwendete Polymersystem enthält weniger Acrylsäure, hat einen höheren K-Wert von 69,5 und ist bezüglich der kohäsiven Eigenschaften, den Scherstandzeiten bei 23 °C und 70 °C moderater eingestellt. Die Scherstandzeiten bei 23 °C liegen bei 2.600 min. Weitere Details zu massespezifischen Angaben befinden sich in Tabelle 1.

Beispiel B4

Die Polymerisation des verwendeten Polymers P3, die Aufkonzentration, die Harzabmischung und das Einarbeiten des Vernetzer-Beschleuniger-Systems und die Beschichtung erfolgt im Wesentlichen wie in Beispiel 1 beschrieben. Abweichend wurde in Verfahren 2 zusätzlich der Füllstoff Kreide Mikrosöhl® 40 eingearbeitet, dazu wurden die Mischschneckengeometrien des verwendeten Doppelschneckenextruders entsprechend angepasst. Das hier verwendete Vernetzer-Beschleuniger-System wurde wie in Beispiel P3 gewählt. Zugesetzt wurden 0,52 Gew.% des difunktionellen Oxetans Bis[1-ethyl(3-oxetanyl)]methylether und 0,52 Gew.% Dicyandiamid (jeweils bezogen auf Acrylatcopolymer).
Die mittlere Massetemperatur nach Austritt aus dem Compoundierextruder stieg gegenüber dem Massesystem aus Beispiel B3 von 110°C auf 117 °C an. Sowohl die gemessenen Klebkräfte mit 9,4 als auch die Scherstandzeiten mit 4.200 min sind gegenüber dem Beispiel B3 verbessert.
Weitere Details zu massespezifischen Angaben befinden sich in Tabelle 1, zu eingestellten Prozessparametern in Tabelle 2 und zu klebtechnischen Ergebnisse in Tabelle 3 jeweils in Zeile B4.

Beispiel B5

Das gemäß Verfahren 1 aufkonzentrierte Basispolymer P4 (Restlösemittetanteil: 0,15 Gew.-%) wurde analog Beispiel B1 nach Verfahren 3 im Doppelschneckenextruder mit dem Vernetzer-Beschleuniger-System compoundiert und beschichtet.

Das Vernetzer-Beschleuniger-System besteht aus

- Pentaerthrittetraglycidether,
  hier Polypox® R16 der Fa. UPPC AG, Deutschland (Epoxid)
  und

- 6-Phenyl-1,3,5-triazin-2,4-diyldiamin,
  hier Benzoguanamin, Fa. EVONIK INDUSTRIES, Deutschland (Beschleuniger).

Analog Beispiel B1 wurden 0,31 Gew.% des multifunktionellen Epoxides Pentaerthrittetraglycidether und 0,48 Gew.% Benzoguanamin (jeweils bezogen auf Acrylatcopolymer) gemäß Verfahren 3 zugesetzt. Die Extruderdrehzahl des LEISTRITZ-Doppelschneckenextruders betrug 100 Umdrehungen pro Minute, der Massedurchsatz 10 kg/h. Die Verarbeitungszeit betrug mehr als 5 min bei einer effektiven Massetemperatur von 114°C nach dem Verlassen des Extruders. Mittels Walzenauftragswerk gemäß Fig. 2 wurden mit einem Masseauftrag von 125 g/m$^2$ auf 23 $\mu$m PET-Folie beschichtet.

Beispiel B6 (Vergleichsbeispiel)

Die Polymerisation des verwendeten Polymers P1, die Aufkonzentration, die Harzabmischung, das Einarbeiten der Vernetzerkomponente und die Beschichtung erfolgt im Wesentlichen wie in Beispiel 1 beschrieben, aber mit folgender Variation:
Das hier verwendete Vernetzungssystem besteht aus

- Pentaerythrittetraglycidether,
  hier Polypox® R16 der Fa. UPPC AG, Deutschland
  und
- Zinkchlorid.

Zugesetzt wurden 0,79 Gew.% des multifunktionellen Epoxides Pentaerythrittetraglycidether und 0,43 Gew.% Zinkchlorid.
Die gemessenen Scherwege gemäß Messmethode H3 "Mikroscherweg" werden nach 25 Tagen Lagerung bei Raumtemperatur zu größer als 2000 $\mu$m gemessen, der elastische Anteil beträgt 0 %, was bedeutet, dass keine oder keine nennenswerte Vernetzung stattgefunden hat.

*Wiederholung der Messungen nach Temperaturlagerung:*

Dieses Klebebandmuster vernetzt weder nach 6-tägier Lagerung bei 70 °C, noch nach einstündiger Lagerung bei 140 °C in einem Wärmeschrank. Gemessen wurden die Klebebandmuster nach diesen Lagerungsbedingungen wiederum mit der Messmethode H3 "Mikroscherweg" und die Scherstrecken wiederum zu größer 2000 $\mu$m bestimmt. Aufgrund nicht vorhandener Vernetzung werden keine weiteren klebtechnischen Ausprüfungen vorgenommen.
Weitere Details zu massespezifischen Angaben befinden sich in Tabelle 1 und zu den eingestellten Prozessparametem in Tabelle 2 jeweils in Zeile B6.

Beispiel B7 (Vergleichsbeispiel)

Die Polymerisation des verwendeten Polymers P1, die Aufkonzentration, die Harzabmischung, das Einarbeiten der Vernetzerkomponente und die Beschichtung erfolgt im Wesentlichen wie in Beispiel 1 beschrieben, aber mit folgender Variation:
Das hier verwendete Vernetzungssystem besteht nur aus

- Dicyandiamid,
  hier Dyhard® 100SF der Fa. EVONIK INDUSTRIES, Deutschland.

In diesem Beispiel wird kein Epoxid oder Oxetan eingesetzt.
Zugesetzt wurden 0,70 Gew.% Dicyandiamid.
Die gemessenen Scherwege gemäß Messmethode H3 "Mikroscherweg" werden nach 25 Tagen Lagerung bei Raumtemperatur zu größer als 2000 $\mu$m gemessen, der elastische Anteil beträgt 0%, was bedeutet, dass keine oder keine nennenswerte Vernetzung stattgefunden hat.

*Wiederholung der Messungen nach Temperaturlagerung:*

Dieses Klebebandmuster vernetzt weder nach 3-monatiger Lagerung bei 70 °C, noch nach einstündiger Lagerung bei 140 °C in einem Wärmeschrank. Gemessen wurde nach diesen Lagerungen wiederum mit der Messmethode H3 "Mikroscherweg", die Scherstrecken zu größer 2000 $\mu$m bestimmt. Aufgrund nicht vorhandener Vernetzung werden keine weiteren klebtechnischen Ausprüfungen vorgenommen.
Weitere Details zu massespezifischen Angaben befinden sich in Tabelle 1 und zu den eingestellten Prozessparametern in Tabelle 2 jeweils in Zeile B7.

Beispiel B8 (Vergleichsbeispiel)

Die Polymerisation des verwendeten Polymers P1, die Aufkonzentration, die Harzabmischung, das Einarbeiten der Vernetzerkomponente und die Beschichtung erfolgt im Wesentlichen wie in Beispiel 1 beschrieben, aber mit folgender Variation:
Das hier verwendete Vernetzungssystem besteht nur aus

- Pentaerthrittetraglycidether,
  hier Polypox® R16 der Fa. UPPC AG, Deutschland.

Zugesetzt wurden 0,31 Gew.% bezogen auf Polymer des multifunktionellen Epoxides Pentaerythrittetraglycidether.
In diesem Beispiel wird kein Beschleuniger (Dimer oder Trimer des Cyanamids bzw. Derivate davon) eingesetzt.
Die gemessenen Scherwege gemäß Messmethode H3 "Mikroscherweg" werden nach 25 Tagen Lagerung bei Raumtemperatur zu größer als 2000 $\mu$m gemessen, der elastische Anteil beträgt 0 %, was bedeutet, dass keine oder keine nennenswerte Vernetzung stattgefunden hat.

*Wiederholung der Messungen nach Temperaturlagerung:*

Dieses Klebebandmuster vernetzt weder nach nachgeschalteter 3-monatiger Lagerung bei 70 °C, noch nach einstündiger Lagerung bei 140 °C in einem Wärmeschrank. Gemessen wurde nach diesen Lagerungsbedingungen erneut mit der Messmethode H3 "Mikroscherweg", die Scherstrecken wurden jeweils zu größer 2000 $\mu$m bestimmt. Aufgrund nicht vorhandener Vernetzung wurden keine weiteren klebtechnischen Ausprüfungen vorgenommen. Weitere Details zu massespezifischen Angaben befinden sich in Tabelle 1 und zu den eingestellten Prozessparametern in Tabelle 2 jeweils in Zeile B8.
Bei Verwendung des erfindungsgemäßen Vernetzer-Beschleuniger-Systems läuft die Vernetzungsreaktion über die funktionellen Gruppen des Polyacrylates auch ohne Wärmezufuhr bei Normalbedingungen (Raumtemperatur) vollständig ab. In der Regel ist nach einer Lagerzeit von 5 Tagen bis 14 Tagen die Vernetzungsreaktion so weit abgeschlossen, dass ein funktionsfähiges Klebeband bzw. eine funktionsfähige Trägerschicht vorliegt. Der Endvernetzungszustand und damit die endgültige Kohäsion der Masse wird je nach Wahl des Masse-Vernetzer-Systems nach einer Lagerung von 14 bis 100 Tagen, in vorteilhafter Form nach 14 bis 50 Tagen Lagerungszeit bei Raumtemperatur erreicht, bei höherer Lagertemperatur erwartungsgemäß früher.
Durch die Vernetzung erhöhen sich die Kohäsion der Klebemasse und damit auch die Scherfestigkeit. Diese Gruppen sind bekanntermaßen sehr stabil. Dies ermöglicht sehr alterungsstabile und wärmebeständige Selbstklebebänder.
Hingegen zeigt sich bei Betrachtung der Vergleichsbeispiele B6 bis B8, dass die Vernetzung nicht zum Erfolg führt, wenn man das erfindungsgemäße Vernetzer-Beschleuniger-System nicht einsetzt.

Beispiele Viskoelastische Träger und Dreischichtaufbauten

I. Herstellung der Haftklebemasse

Polyacrylathaftkleber 1 (PA1):

Ein für radikalische Polymerisationen konventioneller 100 L-Glasreaktor wurde mit 2,8 kg Acrylsäure, 8,0 kg Methylacrylat, 29,2 kg 2-Ethylhexylacrylat und 20,0 kg Aceton/Isopropanol (95:5) befüllt. Nach 45minütiger Durchleitung von Stickstoffgas unter Rühren wurde der Reaktor auf 58 °C hochgeheizt und 20 g AIBN hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Nach 4 und 8 h wurde mit jeweils 10,0 kg Aceton/Isopropanol (95:5) Gemisch verdünnt. Zur Reduktion der Restinitiatoren wurden nach 8 und nach 10 h jeweils 60 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,4 Gew.-% Aluminium-(III)-acetylacetonat (3 %ige Lösung in Isopropanol) abgemischt, auf einen Feststoffgehalt von 30 % mit Isopropanol verdünnt und dann aus Lösung auf eine silikonisierte Trennfolie (50 μm Polyester) beschichtet. Danach (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) betrug der Masseauftrag 50 g/m$^2$.

II. Herstellung der viskoelastischen Träger

Herstellung der Ausgangspolymere für die viskoelastischen Träger der Beispiele VT 1 bis 5

Im Folgenden wird die Präparation der Ausgangspolymere beschrieben. Die untersuchten Polymere werden konventionell über eine freie radikalische Polymerisation in Lösung hergestellt.

Basispolymer HPT 1.

Ein für radikalische Polymerisationen konventioneller Reaktor wurde mit 40 kg 2-Ethylhexylacrylat, 40 kg n-Butylacrylat, 15 kg Methylacrylat, 5 kg Acrylsäure und 67 kg Aceton/ Isopropanol (95:5) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 60 g AIBN zugegeben und nach 4 h wurde mit 14 kg Aceton/Isopropanol Gemisch verdünnt.
Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen K-Wert von 57, einen Feststoffgehalt von 54,6 %, ein mittleres Molekulargewicht von Mw = 714.000 g/mol, Polydispersität PD (Mw/Mn) = 7,6.

Basispolymer HPT 2

Analog Beispiel 1 wurden 65 kg 2-Ethylhexylacrylat, 30 kg tert.-Butylacrylat und 5 kg Acrylsäure in 67 kg Aceton/ Isopropanol (95:5) polymerisiert. Initiiert wurde zweimal mit jeweils 50 g AIBN, zweimal mit jeweils 150 g Bis-(4-tert-butylcyclohexyl)peroxydicarbonat und verdünnt mit 20 kg Aceton/Isopropanol Gemisch (95:5). Nach 22 h Reaktionszeit wurde die Polymerisation abgebrochen und auf Raumtemperatur abgekühlt.
Das Polyacrylat hat einen K-Wert von 61,0 einen Feststoffgehalt von 53,2 %, ein mittleres Molekulargewicht von Mw = 697.000 g/mol, Polydispersität PD (Mw/Mn) = 7,1.

Basispolymer HPT 3

Es wurde analog Beispiel 1 vorgegangen. Zur Polymerisation wurden 60 kg 2-Ethylhexylacrylat, 30 kg Styrol, 5 kg Methylacrylat und 5 kg Acrylsäure in 25 kg Ethylacetat/Isopropanol (97:3) polymerisiert. Initiiert wurde zweimal mit jeweils 50 g AIBN, zweimal mit jeweils 150 g Bis-(4-tert-butylcyclohexyl)peroxydicarbonat (nach 36 und 44 h Reaktionszeit) und verdünnt mit 20 kg Ethylacetat/Isopropanol (97:3). Nach 48 h Reaktionszeit wurde die Polymerisation abgebrochen und auf Raumtemperatur abgekühlt. Das Polyacrylat hat einen K-Wert von 61, einen Feststoffgehalt von 68,4 % und ein mittleres Molekulargewicht von Mw = 567.000 g/mol, Polydispersität PD (Mw/Mn) = 11,8.

Basispolymer HPT 4

Ein für radikalische Polymerisationen konventioneller Reaktor wurde mit 65 kg 2-Ethylhexylacrylat, 30 kg tert-Butylacrylat, 5 kg Acrylsäure, 100 g Dithiobenzoesäurebenzylester und 67 kg Aceton befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben. Nach 4 h verdünnte man mit 10 kg Aceton. Nach 5 und nach 7 h erfolgte eine Zugabe von jeweils 150 g Bis-(4-tert-butylcyclohexyl)peroxydicarbonat. Nach 22 h Reaktionszeit wurde die Polymerisation abgebrochen und auf Raumtemperatur abgekühlt.
Das Polyacrylat hat einen K-Wert von 49,2, einen Feststoffgehalt von 59,2 %, ein mittleres Molekulargewicht von Mw = 379.000 g/mol, Polydispersität PD (Mw/Mn) = 3,1.

Basispolymer HPT 5

Ein für radikalische Polymerisationen konventioneller Reaktor wurde mit 68 kg 2-Ethylhexylacrylat, 25 kg Methylacrylat, 7 kg Acrylsäure und 66 kg Aceton/Isopropanol (95:5) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 60 g AIBN zugegeben. Nach 4 h verdünnte man mit 20 kg Aceton/Isopropanol (95:5). Nach 5 und nach 7 h erfolgte eine Zugabe von jeweils 150 g Bis-(4-tert-butylcyclohexyl)peroxydicarbonat. Nach 22 h Reaktionszeit wurde die Polymerisation abgebrochen und auf Raumtemperatur abgekühlt.

Das Polyacrylat hat einen K-Wert von 55, einen Feststoffgehalt von 55 %, ein mittleres Molekulargewicht von Mw = 579.000 g/mol, Polydispersität PD (Mw/Mn) = 7,9.

Aufkonzentration und Compoundierung der Basispolymere HPT 1 - 5 für die viskoelastischen Träger:

Die Acrylatcopolymere HPT 1 - 5 werden analog Verfahren 1 von den Lösemitteln befreit und ggf. anschließend analog Verfahren 2 mit Zusatzstoffen versetzt, vgl. die einzelnen Beispiele.

Verfahren 4: Herstellung der 3-Schichtaufbauten mittels 2-Walzenkalander

Das Verfahren wurde wie in Fig. 3 beschrieben durchgeführt. Mittels Verteilerdüse (1) wird die mit dem Vernetzer-Beschleuniger-System und ggf. Füllstoffen fertig compoundierte viskoelastische Masse (3) dem Walzenspalt zugeführt. Die Ausformung der viskoelastischen Masse zu einem viskoelastischen Film erfolgt zwischen den Kalanderwalzen (W1) und (W2) im Walzenspalt zwischen zwei Selbstklebemassen (6a, 6b), die ihrerseits auf anti-adhäsiv ausgerüsteten Trägermaterialien (5a, 5b) beschichtet zugeführt werden. Dabei kommt es gleichzeitig zur Ausformung der viskoelastischen Masse auf die eingestellte Schichtdicke und zur Beschichtung mit den beiden zugeführten Selbstklebemassen. Um die Verankerung der Selbstklebemassen (6a, 6b) auf der ausgeformten, viskoelastischen Trägerschicht (4) zu verbessern, werden die Selbstklebemassen vor der Zuführung in den Walzenspalt mittels Corona-Station (8) coroniert (Corona-Anlage der Firma VITAPHONE, Dänemark, 100 W-min/m$^2$). Diese Behandlung führt nach der Herstellung des Dreischichtverbundes zu einer verbesserten chemischen Anbindung an die viskoelastische Trägerschicht. Die Bahngeschwindigkeit bei Durchlaufen der Beschichtungsanlage beträgt 30 m/min. Nach Verlassen des Walzenspaltes wird ggf. ein anti-adhäsiver Träger (5a) ausgedeckt und das fertige Dreischichtprodukt (7) mit dem verbleibenden zweiten anti-adhäsiven Träger (5b) aufgewickelt (Richtung (9)).

Im Folgenden werden konkrete Beispiele zur Herstellung der Selbstklebemassen und Beschichtung der erfindungsgemäßen Klebebänder vorgestellt, ohne dass durch die Wahl der angegebenen Formulierungen, Konfigurationen und Prozessparameter die Erfindung unnötig eingeschränkt werden soll.

Beispiel MT 1

Das Basispolymer HPT1 wurde gemäß Verfahren 1 aufkonzentriert (Feststoffgehalt 99,7%) und anschließend gemäß Verfahren 3 im Doppelschneckenextruder kontinuierlich mit dem Vernetzer-Beschleuniger-System bestehend aus Pentaerthrittetraglycidether (Polypox® R16; 0,22 Gew.-% bezogen auf das Polyacrylat) und Dicyandiamid (Dyhard® 100SF; 0,20 Gew.-% bezogen auf das Polyacrylat) compoundiert.
Die Beschichtung zur Erzeugung des viskoelastischen Trägers VT1 aus dem Basispolymer HPT1 zwischen die zuvor auf silikonisierte Polyesterfolien beschichtete Masseschichten PA 1 erfolgt am 2-Walzenauftragswerk bei Walzentemperaturen von 100 °C gemäß Verfahren 4. Die Schichtdicke des viskoelastischen Trägers VT 1 betrug 880 μm. Die Coronaleistung betrug 100W-min/m$^2$. Nach 7 Tagen Raumtemperaturlagerung wurden die klebtechnischen Daten jeweils von der offenen und abgedeckten Seite gemessen. Die Daten des Beispiels MT 1 sind in Tabelle 4 zusammengefasst.

Beispiel MT 2

Das Basispolymer HPT2 wurde gemäß Verfahren 1 aufkonzentriert (Feststoffgehalt 99,8%) und anschließend gemäß Verfahren 3 im Doppelschneckenextruder kontinuierlich mit dem Vernetzer-Beschleuniger-System bestehend aus 3,4-Epoxycyclohexyl-3,4-epoxycyclohexancarboxylat (Cyracure™ UVR 6105; 0,56 Gew.-% bezogen auf das Polyacrylat) und Dicyandiamid (Dyhard® 100SF; 0,40 Gew.-% bezogen auf das Polyacrylat) compoundiert. Anschließend wurde analog Beispiel 1 zwischen jeweils zuvor auf silikonisierte Polyesterfolien beschichtete Masseschichten PA 1 am 2-Walzenauftragswerk gemäß Verfahren 3 beschichtet. Die Schichtdicke des viskoelastischen Trägers VT 2 betrug 850 μm. Die Coronaleistung betrug 100 W·min/m$^2$. Nach 7 Tagen Raumtemperaturlagerung wurden die klebtechnischen Daten jeweils der offenen und abgedeckten Seite gemessen. Die Daten des Beispiels MT 2 sind in Tabelle 4 zusammengefasst.

Beispiel. MT 3

Das Basispolymer HPT3 wurde gemäß Verfahren 1 aufkonzentriert (Feststoffgehalt 99,7%) und anschließend gemäß Verfahren 2 mit 5,5 Gew.-% Hohlglaskugeln Q-CEL® 5028 (Fa. POTTERS INDUSTRIES) compoundiert und gemäß Verfahren 3 im Doppelschneckenextruder kontinuierlich mit dem Vernetzer-Beschleuniger-System bestehend aus Pentaerthrittetraglycidether (Polypox® R16; 0,56 Gew.% bezogen auf das Polyacrylat) und 6-Phenyl-1,3,5-triazin-2,4-diyldiamin (Benzoguanamin; 0,80 Gew.-% bezogen auf das Polyacrylat) compoundiert. Die Beschichtung zur Erzeugung des viskoelastischen Trägers VT3 zwischen die zuvor auf silikonisierte Polyesterfolien beschichtete Masseschichten PA 1 erfolgt am 2-Walzenauftragswerk bei Walzentemperaturen von 100 °C gemäß Verfahren 3. Die Schichtdicke des viskoelastischen Trägers VT 3 betrug 800 $\mu$m. Die Coronaleistung betrug 100 W·min/m$^2$. Nach 7 Tagen Raumtemperaturlagerung wurden die klebtechnischen Daten jeweils der offenen und abgedeckten Seite gemessen. Die Daten des Beispiels MT 3 sind in Tabelle 4 zusammengefasst.

Beispiel MT 4

Das Basispolymer HPT 4 wurde gemäß Verfahren 1 aufkonzentriert (Feststoffgehalt 99,7%), anschließend gemäß Verfahren 2 mit 20 Gew.-% Mikrosöhl-Kreide (Mikrosöhl® 40) abgemischt und gemäß Verfahren 3 im Doppelschneckenextruder kontinuierlich mit dem Vernetzer-Beschleuniger-System bestehend aus Bis[1-ethyl(3-oxetanyl)]methylether (Aron OXT-221; 0,34 Gew.-% bezogen auf das Polyacrylat) und Dicyandiamid (Dyhard® 100SF; 0,42 Gew.-% bezogen auf das Polyacrylat) compoundiert. Die Beschichtung zur Erzeugung des viskoelastischen Trägers VT4 zwischen die zuvor auf silikonisierte Polyesterfolien beschichtete Masseschichten PA 1 erfolgt am 2-Walzenauftragswerk bei Walzentemperaturen von 100 °C gemäß Verfahren 3. Die Schichtdicke des viskoelastischen Trägers VT 4 betrug 850 $\mu$m. Die Coronaleistung betrug 100 W·min/m$^2$. Nach 7 Tagen Raumtemperaturlagerung wurden die klebtechnischen Daten jeweils der offenen und abgedeckten Seite gemessen. Die Daten des Beispiels MT 4 sind in Tabelle 4 zusammengefasst.

Beispiel MT 5

Das Basispolymer HPT 5 wurde gemäß Verfahren 1 aufkonzentriert (Feststoffgehalt 99,8%), anschließend gemäß Verfahren 2 mit 3 Gew.-% nicht expandierten Mikrohohlkugeln Expancel® 092 DU 40 (Fa. AKZO NOBEL, Deutschland) abgemischt und gemäß Verfahren 3 im Doppelschneckenextruder kontinuierlich mit dem Vernetzer-Beschleuniger-System bestehend aus 3,4-Epoxycyclohexyl-3,4-epoxycyclohexancarboxylat (Cyracure™ UVR 6105; 0,54 Gew.-% bezogen auf das Polyacrylat) und Dicyandiamid (Amicure™ CG-1200; 0,42 Gew.-% bezogen auf das Polyacrylat) compoundiert. Durch Einbringen von Wärme wurde die Mischung im Extruder expandiert und anschließend zwischen die zuvor auf silikonisierte Polyesterfolien beschichtete Masseschichten PA 1 gemäß Verfahren 3 bei Walzentemperaturen von 130 °C beschichtet. Die Schichtdicke des expandierten viskoelastischen Trägers VT 5 betrug 800 $\mu$m. Die Coronaleistung zur Vorbehandlung der Haftklebeschichten betrug 100 W·min/m$^2$. Nach 7 Tagen Raumtemperaturlagerung wurden die klebtechnischen Daten jeweils der offenen und abgedeckten Seite gemessen. Die Daten des Beispiels MT 5 sind in Tabelle 4 zusammengefasst.
Wie den Daten der Tabelle 4 zu entnehmen ist, haben die erfinderisch doppelseitig klebenden Montageklebebänder sehr gute klebtechnische Daten. Besonders positiv ist das ausgewogene Klebprofil der jeweiligen Seiten. Bei gleicher Klebmassenschicht auf beiden Seiten des Klebebandes zeigen diese nahezu gleiche klebtechnische Daten. Dies zeigt die homogene Vernetzung durch die Schicht hindurch. Dies ist für den Fachmann überraschend. Zudem zeigen diese dreischichtigen Klebebänder keine Delaminierung. Die Verankerung der Schichten untereinander ist durch die Coronabehandlung der Haftklebeschichten und der Nachvernetzung der angrenzenden viskoelastische Trägerschicht sehr gut.

Tabelle 1: Massespezifische Angaben

| Beispiel | Basis-Polymer | K-Wert | Compoundieren gemäß Verfahren 2 | | |
| --- | --- | --- | --- | --- | --- |
| | | | Polymer und Zuschlagstoffe | Einsatzstoffe und -mengen | |
| | | | | Vernetzer | Gew-% auf Polymer |
| | | [ ] | | Beschleuniger | |
| B1 | P1 | 59 | 70 Teile Polymer P1 + 30 Teile Harz DT 110 | Polypox® R16 | 0,25 |
| | | | | Dyhard® 100SF | 0,31 |
| B2 | P2 | 41,9 | 70 Teile Polymer P2 + 30 Teile Harz DT 110 | Cyracure™ UVR6105 | 0,82 |
| | | | | Taicros®-TMT | 0,42 |
| B3 | P3 | 69,5 | 70 Teile Polymer P3 + 30 Teile Harz DT 110 | Aron OXT-221 | 0,52 |
| | | | | Dyhard® 100SF | 0,52 |
| B4 | P3 | 69,5 | 49 Teile Polymer P3 + 21 DT Teile Harz 110 + 30 Teile Kreide Mikrosöhl® 40 | Aron OXT-221 | 0,52 |
| | | | | Dyhard® 100SF | 0,52 |
| B5 | P4 | 51 | 100 Teile Polymer P4 | Polypox® R16 | 0,31 |
| | | | | Benzoguanamin | 0,48 |
| B6 | P1 | 59 | 70 Teile Polymer P1 + 30 Teile Harz DT 110 | Polypox® R16 | 0,79 |
| | | | | Zinkchlorid | 0,43 |
| B7 | P1 | 59 | 70 Teile Polymer P1 + 30 Teile Harz DT110 | / | / |
| | | | | Dyhard® 100SF | 0,70 |
| Beispiel | Basis-polymer | K-Wert | Polymer und Zuschlagstoffe | Einsatzstoffe und -mengen | |
| | | | | Vernetzer | Gew-% auf Polymer |
| | | [ ] | | Beschleuniger | |
| B8 | P1 | 59 | 70 Teile Polymer P1 + 30 Teile Harz DT110 | Polypox® R16 | 0,31 |
| | | | | / | / |

K-Wert = Messmethode A2
DT 110 = Dertophene® T110

Tabelle 2: Prozessparameter

| Beispiel | Basispolymer | | Compoundierung gemäß Verfahren 2 | Prozessparameter | | | | | | | |
|---|---|---|---|---|---|---|---|---|---|---|---|
| | Polymer | K-Wert | Anteil Zuschlagstoffe | Durchsatz Gesamtmasse DSE [kg/h] | Drehzahl DSE [1/min] | Sollstromaufnahme DSE [A] | Druck Ausgang DSE [bar] | Massetemp. DSE [°C] | Rakelwalze W | Beschichtungswalze BW | Verarbeitungszeit [min] |
| [] | [] | [] | | | | | | | | | |
| B1 | P1 | 59 | 70 Teile Polymer P1 + 30 Teile Harz DT 110 | 32,0 | 110 | 15 | 12 | 125 | 100 | 100 | größer 7 |
| B2 | P2 | 41,9 | 70 Teile Polymer P2 + 30 Teile Harz DT 110 | 16,4 | 125 | 7 | 5 | 108 | 100 | 100 | größer 5 |
| B3 | P3 | 69,5 | 70 Teile Polymer P3 + 30 Teile Harz DT 110 | 12,0 | 110 | 8 | 10 | 110 | 100 | 100 | größer 5 |
| B4 | P3 | 69,5 | 49 Teile Polymer P3 + 21 Teile Harz DT 110+ 30 Teile Kreide Mikrosöhl® 40 | 16,0 | 120 | 10 | 15 | 117 | 100 | 100 | größer 7 |
| B5 | P4 | 51 | Polymer P4 | 10,0 | 100 | 14 | 20 | 114 | 100 | 100 | größer 5 |
| B6 | P1 | 59 | 70 Teile Polymer P1 + 30 Teile Harz DT 110 | 15,0 | 100 | 9 | 11 | 111 | 100 | 100 | größer 10 |

| Polymer [] | K-Wert [] | Anteil Zuschlagst-offe [] | Durchsatz Ge-samtmasse DSE [kglh] | Drehzahl DSE [1/min] | Sollstromaufnahme DSE [A] | Druck Ausgang DSE [bar] | Masse-temp. DSE [°C] | Rakel-walze W | Beschichtung-swalze BW | Verarbeitungs zeit [min] | |
|---|---|---|---|---|---|---|---|---|---|---|---|
| B7 | P1 | 59 | 70 Teile Polymer P1 + 30 Teile Harz DT 110 | 16,0 | 100 | 11 | 10 | 118 | 100 | 100 | größer 10 |
| B8 | P1 | 59 | 70 Teile Polymer P1 + 30 Teile Harz DT 110 | 150 | 100 | 9 | 8 | 115 | 100 | 100 | größer 10 |
| DSE = Doppelschneckenextruder; DT 110 = Dertophene® T110 | | | | | | | | | | | |

Tabelle 3: Klebtechnische Ergebnisse

| Beispiel | Basispolymer | | Compoundierverfahren 2 | | Klebtechnische Eigenschaften nach einer Lagerung der Muster von 25 Tagen bei Raumtemperatur | | | | | |
|---|---|---|---|---|---|---|---|---|---|---|
| [] | Polymer [] | K-Wert [] | Anteil Zuschlagstoffe | Trägerfolie [] | Masseauftrag [g/m$^2$] | Klebkraft Stahl [N/cm] | Klebkraft PE [N/cm] | Scherstandzeit 10N, 23°C [min] | Scherstandzeit 10N, 70°C [min] | MSW 40°C / elast. Anteil [$\mu$m]/[%] |
| B1 | P1 | 59 | 70 Teile Polymer P1 + 30 Teile Harz DT 110 | 23$\mu$m PET-Folie | 90 | 10,8 | 4,6 | > 10.000 | 120 | 180 / 79 |
| B2 | P2 | 41,9 | 70 Teile Polymer P2 + 30 Teile Harz DT 110 | 23$\mu$m PET-Folie | 105 | 9,8 | 2,4 | > 10.000 | 90 | 70 / 90 |
| B3 | P3 | 69,5 | 70 Teile Polymer P3 + 30 Teile Harz DT 110 | 23 $\mu$m PET-Folie | 79 | 8,1 | 4,4 | 2.600 | 15 | 512 / 67 |
| B4 | P3 | 69,5 | 49 Teile Polymer P3 + 21 Teile Harz DT 110 + 30 Teile Kreide Mikrosöh® 40 | 23 $\mu$m PET-Folie | 80 | 9,4 | 3,1 | 4.200 | 28 | 430 / 73 |
| B5 | P4 | 51 | nur Polymer P4 | 23$\mu$m PET-Fone | 125 | 8,6 | 2,5 | 10.000 | 5670 | 960/79 |
| B6 | P1 | 59 | 70 Teile Polymer P1 + 30 Teile Harz DT 110 | 23$\mu$m PET-Folie | 105 | Prüfungen nicht möglich, Formulierung ist nicht vernetzt. | | | | größer 2000/0 |
| B7 | P1 | 59 | 70 Teile Polymer P1 + 30 Teile Harz DT 110 | 23$\mu$m PET-Folie | 75 | Prüfungen nicht möglich, Formulierung ist nicht vernetzt | | | | größer 2000/0 |
| B8 | P1 | 59 | 70 Teile Polymer P1 + 30 Teile Harz DT 110 | 23$\mu$m PET-Folie | 81 | Prüfungen nicht möglich, Formulierung ist nicht vernetzt | | | | größer 2000/0 |

Klebkraft Stahl / PE = Messmethode H1

Scherstandzeit = Messmethode H2

MSW = Mikroscherweg = Messmethode H3

DT 110 = Dertophene® T110

EP 2 186 869 B2

Tabelle 4: Produktaufbau und klebtechnische Daten der Dreischichtaufbauten

| Beispiel | Dreischichtprodukt | | | Träger dicke [$\mu$m] | Klebkraft Stahl, [N/cm] | | Scherstandzeit 10 N 23°C [min] | | Wandhakentest [min] | | MSW 40°C / elast. Anteil [$\mu$m] / [%] |
|---|---|---|---|---|---|---|---|---|---|---|---|
| | Haftkleber 1 | Viskoelastische Trägerschicht | Haftkleber 2 | | Seite | abgedeckte Seite | offene Seite | abgedeckte Seite | offene Seite | abgedeckte Seite | |
| **MT1** | 50 g/m$^2$ PA 1 | VT 1 | 50 g/m$^2$ PA 1 | 880 | 10,9 | 11,2 | > 10000 | > 10000 | 2580 | 2795 | 284 / 91 |
| **MT 2** | 50 g/m$^2$ PA 1 | VT 2 | 50 g/m$^2$ PA 1 | 850 | 14,8 | 14,6 | 7850 | 6970 | 2876 | 2256 | 817 / 78 |
| **MT 3** | 50 g/m$^2$ PA 1 | VT 3 | 50 g/m$^2$ PA 1 | 800 | 13,7 | 14,2 | > 10000 | > 10000 | 9320 | 9360 | 346 / 79 |
| **MT 4** | 50 g/m$^2$ PA 1 | VT 4 | 50 g/m$^2$ PA 1 | 850 | 13,7 | 13,6 | 7540 | 7468 | 2880 | 2568 | 738 / 75 |
| **MT 5** | 50 g/m$^2$ PA 1 | VT 5 | 50 g/m$^2$ PA 1 | 800 | 13,5 | 13,6 | > 10000 | > 10000 | > 10000 | > 10000 | 967 / 76 |
| Klebkraft Stahl = Messmethode V1 Scherstandzeit = Messmethode V2 Wandhakentest = Messmethode V3 | | | | | | | | | | | |

## EP 2 186 869 B2

**Patentansprüche**

1. Polyacrylat-Schmelze enthaltend ein Vernetzer-Beschleuniger-System für die thermische Vernetzung von Polyacrylaten mit funktionellen Gruppen, die geeignet sind, mit cyklischen Ethern, insbesondere Epoxid-oder Oxetangruppen, Verknüpfungsreaktionen einzugehen, umfassend zumindest eine epoxid- oder oxetangruppenhaltige Substanz (Vernetzer) zu 0.1 - 5 Gew.-%, bezogen auf das Polymer ohne Additive, und zumindest eine Substanz ausgewählt aus Dicyandiamiden, Melaminen, 1,3,5-Triazinen, Ammelinen, Ammeliden, Cyanursäuren, Isocyanursäuren und Guanaminen (Beschleuniger), wobei das Polyacrylat ein mit Epoxid-oder Oxetangruppen, vernetzbares Polyacrylat ist.

2. Polyacrylat-Schmelze nach Anspruch 1, **dadurch gekennzeichnet, dass**
als epoxid- oder oxetangruppenhaltige Substanz multifunktionelle Epoxide oder Oxetane eingesetzt werden.

3. Polyacrylat-Schmelze nach einem der vorangehenden Ansprüche, **dadurch gekennzeichnet, dass**
als epoxid- oder oxetangruppenhaltige Substanz bifunktionelle Epoxide oder Oxetane, also solche enthaltend zwei Epoxid- oder Oxetangruppen, eingesetzt werden.

4. Polyacrylat-Schmelze nach einem der vorangehenden Ansprüche, **dadurch gekennzeichnet, dass** als epoxid- oder oxetangruppenhaltige Substanz eine oder mehrere gemischtfunktionelle Verbindungen eingesetzt wird, also solche enthaltend zumindest eine Epoxid- und zumindest eine Oxetangruppe, insbesondere solche enthaltend genau eine Epoxid- und eine Oxetangruppe.

5. Verfahren zur thermischen Vernetzung von Polyacrylaten mit funktionellen Gruppen, die geeignet sind, mit cyklischen Ethern, insbesondere Epoxid- oder Oxetangruppen, Verknüpfungsreaktionen einzugehen, **gekennzeichnet durch** den Einsatz eines Vernetzer-Beschleuniger-Systems nach einem der vorangehenden Ansprüche.

6. Verfahren nach Anspruch 5, **dadurch gekennzeichnet, dass**
man die Vernetzung in der Schmelze des Polyacrylates in Gegenwart des Vernetzer-Beschleuniger-Systems initiiert und dieses danach zu einem Zeitpunkt abkühlt, zu dem die Vernetzungsreaktion zu weniger als 10 % abgeschlossen ist, mit der Maßgabe, dass die Vernetzungsreaktion auch nach der Abkühlung fortschreitet, bis der endliche Vernetzungsgrad erreicht ist.

7. Verfahren nach Anspruch 6, **dadurch gekennzeichnet, dass**
die Abkühlung bis auf im Wesentlichen Raumtemperatur stattfindet.

8. Verfahren nach einem der Ansprüche 5 bis 7, **dadurch gekennzeichnet, dass**
die Initiierung in einem Verarbeitungsreaktor erfolgt, insbesondere einem kontinuierlich arbeitenden Verarbeitungsreaktor, das Polyacrylat nach der Initiierung aus dem Verarbeitungsreaktor entnommen wird und auf einen permanenten oder temporären Träger beschichtet wird und das Polyacrylat bei der Beschichtung oder unmittelbar nach der Beschichtung auf im Wesentlichen Raumtemperatur abgekühlt wird.

9. Verwendung eines nach einem der Ansprüche 5 bis 8 hergestellten Polyacrylats als Haftklebemasse, insbesondere für ein ein- oder doppelseitiges Haftklebeband.

10. Verwendung eines nach einem der Ansprüche 5 bis 8 hergestellten Polyacrylats als Heißsiegelmasse.

11. Verwendung eines nach einem der Ansprüche 5 bis 8 hergestellten Polyacrylats als Trägermaterial, insbesondere für ein ein- oder beidseitig mit Haftklebemasse beschichtetes Klebeband.

**Claims**

1. Polyacrylate melt comprising a crosslinker-accelerator system for the thermal crosslinking of polyacrylates with functional groups suitable for entering into linking reactions with cyclic ethers, in particular epoxide or oxetane groups, comprising at least one substance containing epoxide or oxetane groups (crosslinker) in an amount of 0.1 - 5% by weight, based on the polymer without additives, and at least one substance selected from dicyandiamides, melamines, 1,3,5-triazines, ammelins, ammelids, cyanuric acids, isocyanuric acids and guanamines (accelerators), wherein the polyacrylate is a polyacrylate crosslinkable with epoxide or oxetane groups.

**2.** Polyacrylate melt according to Claim 1, **characterized in that** polyfunctional epoxides or oxetanes or oxetanes are used as substance containing epoxide or oxetane groups.

**3.** Polyacrylate melt according to either of the preceding claims, **characterized in that** difunctional epoxides or oxetanes, i.e. those containing two epoxide or oxetane groups, are used as substance containing epoxide or oxetane groups.

**4.** Polyacrylate melt according to any of the preceding claims, **characterized in that** one or more compounds of mixed functionality, in other words compounds containing at least one epoxide group and at least one oxetane group, in particular those containing exactly one epoxide group and one oxetane group, is used as substance containing epoxide or oxetane groups.

**5.** Process for thermal crosslinking of polyacrylates with functional groups capable of entering into linking reactions with cyclic ethers, in particular epoxide or oxetane groups, **characterized by** the use of a crosslinker-accelerator system according to any of the preceding claims.

**6.** Process according to Claim 5, **characterized in that** the crosslinking is initiated in the melt of the polyacrylate in the presence of the crosslinker-accelerator system, which is thereafter cooled at a point in time at which the crosslinking reaction has been concluded to an extent of less than 10%, with the proviso that the crosslinking reaction also continues after the cooling, until the final degree of crosslinking has been reached.

**7.** Process according to Claim 6, **characterized in that** the cooling takes place to essentially room temperature.

**8.** Process according to any of Claims 5 to 7, **characterized in that** the initiation takes place in a processing reactor, in particular a continuously operating processing reactor, the polyacrylate is removed from the processing reactor after initiation and is coated onto a permanent or temporary backing, and the polyacrylate is cooled to essentially room temperature in the course of coating or immediately after coating.

**9.** Use of a polyacrylate prepared according to any of Claims 5 to 8 as a pressure-sensitive adhesive, in particular for a pressure-sensitive adhesive tape coated on one or both sides.

**10.** Use of a polyacrylate prepared according to any of Claims 5 to 8 as a heat-sealing composition.

**11.** Use of a polyacrylate prepared according to any of Claims 5 to 8 as a backing material, more particularly for an adhesive tape coated on one or both sides with pressure-sensitive adhesive.

**Revendications**

**1.** Masse fondue de polyacrylate contenant un système réticulant-accélérateur pour la réticulation thermique de polyacrylates comprenant des groupes fonctionnels qui sont appropriés pour réagir selon des réactions de liaison avec des éthers cycliques, notamment des groupes époxyde ou oxétane, comprenant au moins une substance contenant des groupes époxyde ou oxétane (réticulant) à hauteur de 0,1 à 5 % en poids, par rapport au polymère sans additifs, et au moins une substance choisie parmi les dicyandiamides, les mélamines, les 1,3,5-triazines, les ammélines, les ammélides, les acides cyanuriques, les acides isocyanuriques et les guanamines (accélérateur), le polyacrylate étant un polyacrylate réticulable avec des groupes époxyde ou oxétane.

**2.** Masse fondue de polyacrylate selon la revendication 1, **caractérisée en ce que** des époxydes ou oxétanes multifonctionnels sont utilisés en tant que substance contenant des groupes époxyde ou oxétane.

**3.** Masse fondue de polyacrylate selon l'une quelconque des revendications précédentes, **caractérisée en ce que** des époxydes ou oxétanes bifonctionnels, c'est-à-dire contenant deux groupes époxyde ou oxétane, sont utilisés en tant que substance contenant des groupes époxyde ou oxétane.

**4.** Masse fondue de polyacrylate selon l'une quelconque des revendications précédentes, **caractérisée en ce qu'**un ou plusieurs composés à fonctionnalité mixte, c'est-à-dire contenant au moins un groupe époxyde et au moins un groupe oxétane, notamment contenant exactement un groupe époxyde et un groupe oxétane, sont utilisés en tant que substance contenant des groupes époxyde ou oxétane.

**5.** Procédé de réticulation thermique de polyacrylates comprenant des groupes fonctionnels qui sont appropriés pour réagir selon des réactions de liaison avec des éthers cycliques, notamment des groupes époxyde ou oxétane, **caractérisé par** l'utilisation d'un système réticulant-accélérateur selon l'une quelconque des revendications précédentes.

**6.** Procédé selon la revendication 5, **caractérisé en ce que** la réticulation est initiée dans la masse fondue du polyacrylate en présence du système réticulant-accélérateur, puis celle-ci est refroidie jusqu'à un moment où la réaction de réticulation est terminée à moins de 10 %, à condition que la réaction de réticulation continue après le refroidissement jusqu'à ce que le degré de réticulation final soit atteint.

**7.** Procédé selon la revendication 6, **caractérisé en ce que** le refroidissement a lieu essentiellement jusqu'à la température ambiante.

**8.** Procédé selon l'une quelconque des revendications 5 à 7, **caractérisé en ce que** l'initiation a lieu dans un réacteur de traitement, notamment dans un réacteur de traitement fonctionnant en continu, le polyacrylate est déchargé du réacteur de traitement après l'initiation et revêtu sur un support permanent ou temporaire, et le polyacrylate est refroidi essentiellement à la température ambiante pendant le revêtement ou directement après le revêtement.

**9.** Utilisation d'un polyacrylate fabriqué selon l'une quelconque des revendications 5 à 8 en tant que composition adhésive sensible à la pression, notamment pour une bande adhésive sensible à la pression simple ou double face.

**10.** Utilisation d'un polyacrylate fabriqué selon l'une quelconque des revendications 5 à 8 en tant que composition de joint thermique.

**11.** Utilisation d'un polyacrylate fabriqué selon l'une quelconque des revendications 5 à 8 en tant que matériau support, notamment pour une bande adhésive revêtue d'un côté ou des deux côtés avec une composition adhésive sensible à la pression.

1.1 ——— 

——— 1.2

1.3

X

RW

BW

**Fig. 1**

**Fig. 2**

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0752435 A1
- US 4524104 A
- US 6340719 B1
- DE 102004044086 A1
- DE 10008841 A1
- EP 1317499 A
- EP 1978069 A
- WO 2005014682 A1
- DE 102004044086 A
- US 6765078 B2
- US 6720399 B2
- EP 1311555 B1
- EP 0824111 A1
- EP 826698 A1
- EP 824110 A1
- EP 841346 A1
- EP 850957 A1
- US 5945491 A
- US 5854364 A
- US 5789487 A
- WO 2006027387 A1
- SK 0125 B

**In der Beschreibung aufgeführte Nicht-Patentliteratur**

- Ullmann's Encyclopedia of Industrial Chemistry. **T. GÜNTHER ; B. MERTSCHENK ; U. RUST.** Cyanamides. Wiley-VCh, 2003, vol. 10, 173-197
- **T.G. FOX.** *Bull. Am. Phys. Soc.,* 1956, vol. 1, 123